# EUROPÄISCHE PATENTSCHRIFT

(11) **EP 2 706 515 B1**
(45) Veröffentlichungstag und Bekanntmachung des Hinweises auf die Patenterteilung: **12.11.2014**
(21) Anmeldenummer: 12183529.2
(22) Anmeldetag: 07.09.2012
(51) Int. Cl.: G08B 17/107

(54) **Vorrichtung und Verfahren zum Detektieren von Streulichtsignalen**
Device and method for detecting dispersed light signals
Dispositif et procédé de détection de signaux de lumière diffusée

(43) Veröffentlichungstag der Anmeldung: 12.03.2014
(73) Patentinhaber: Amrona AG, 6302 Zug (CH)
(72) Erfinder: Siemens, Andreas, 30880 Laatzen (DE); Wagner, Ernst-Werner, 29308 Winsen (DE)
(74) Vertreter: Rupprecht, Kay

(56) Entgegenhaltungen:
- EP-A2- 1 408 469
- GB-A- 2 259 763
- KAPILA K PAHALAWATTA ET AL: "Classifying Airborne Particles", DIGITAL IMAGE COMPUTING TECHNIQUES AND APPLICATIONS (DICTA), 2011 INTERNATIONAL CONFERENCE ON, IEEE, 6. Dezember 2011 (2011-12-06), Seiten 376-381, XP032094722, DOI: 10.1109/DICTA.2011.70 ISBN: 978-1-4577-2006-2

## Beschreibung

Die vorliegende Erfindung betrifft eine Vorrichtung sowie ein Verfahren zum Detektieren von Streulichtsignalen gemäß dem Oberbegriff der unabhängigen Patentansprüche 1 und 19.

Eine derartige Vorrichtung ist aus der Druckschrift GB 2 259 763 A bekannt.

Insbesondere auf dem Gebiet der Branddetektionsvorrichtungen sind nach optischen Prinzipien arbeitende Rauchmelder bekannt, welche einen Streulichtbereich, in welchem sich gegebenenfalls in der Luft verteilte Partikel befinden könnten, mit dem Licht aus einer Lichtquelle beaufschlagen. Derartige Partikel können beispielsweise Staubpartikel oder Tabakrauchpartikel, aber auch von Zimmerbränden herrühren, deren Auftreten es zu detektieren gilt. Außerhalb des direkten Lichtweges des aus der Lichtquelle emittierten Lichtes sind bei derartigen herkömmlichen Vorrichtungen optische Sensoren wie beispielsweise Fotodioden, Fotowiderstände oder dergleichen mit einer entsprechend zugeordneten Verstärkerschaltung angeordnet. Die Sensoren detektieren gegebenenfalls von den Partikeln gestreutes Licht und geben beispielsweise bei Überschreiten eines bestimmten Schwellwertes ein Alarmsignal aus.

Des Weiteren sind aus der Technik Systeme zum Klassifizieren von unterschiedlichen Partikelarten bekannt, das heißt insbesondere Systeme zur Klassifizierung unterschiedlicher Brandarten anhand der Partikelbeschaffenheit. Beispielsweise ist aus der EP 2281 286 A1 eine Vorrichtung bekannt, welche eine Unterscheidung von Staubpartikeln und solchen Partikeln ermöglicht, die während Bränden auftreten. Derartige herkömmliche Systeme zur Klassifikation der Partikelart setzen hierbei neben Streulichtsensoren (optischen Sensoren) in der Regel auch andersartige Sensoren - beispielsweise Gassensoren oder dergleichen - ein.

Die genannten herkömmlichen Vorrichtungen weisen den Nachteil auf, dass entweder bei einem relativ preiswerten Aufbau eine Klassifizierung nach unterschiedlichen Partikelarten nur unzuverlässig möglich ist und eine wirksame Störgrößenerkennung bzw. -unterdrückung nicht gegeben ist, oder dass relativ teure Sensortechniken wie beispielsweise Gassensoren oder dergleichen zum Einsatz kommen müssen. Hierdurch werden die Kosten und den Schaltungsaufwand in die Höhe getrieben.

Zudem weisen insbesondere Gassensoren den Nachteil auf, dass sie verhältnismäßig viel Energie verbrauchen.

Der vorliegenden Erfindung liegt die Aufgabe zugrunde, eine herkömmliche Vorrichtung zum Detektieren von Streulichtsignalen derart weiterzubilden, dass sie einfach und kostengünstig aufgebaut und hergestellt werden kann und die Erkennungsgenauigkeit verbessert wird. Zudem soll der Energieverbrauch reduziert werden.

Die Aufgabe wird gelöst durch eine Vorrichtung gemäß dem unabhängigen Anspruch 1 sowie ein Verfahren gemäß dem unabhängigen Anspruch 19.

Vorteilhafte Weiterbildungen der erfindungsgemäßen Lösung sind in den abhängigen Ansprüchen angegeben.

Der Erfindung liegen folgende prinzipiellen Kenntnisse zugrunde:

Das Grundprinzip von optisch arbeitenden Vorrichtungen zum Detektieren von Streulichtsignalen insbesondere in Rauchmeldern und dergleichen ist das Ausnutzen von unterschiedlichen Streueigenschaften verschiedenartiger in der Umgebungsluft verteilter Partikel. Die Umgebungsluft stellt hierbei ein Trägerfluid dar, in welchem die Partikel, das heißt in der Regel feste, aber durchaus auch flüssige Kleinstteilchen, verteilt sind.

Je nach dem Verhältnis der Partikelgröße zur Wellenlänge des Lichtes, mit welchem ein Streulichtbereich beaufschlagt wird, wirken bei den unterschiedlichen Teilchen bzw. Teilchenarten (Partikelarten) unterschiedliche Reflexions- und Streumechanismen. Während bei gewissen Verhältnissen von Partikelgröße zur Wellenlänge des beaufschlagenden Lichtes angenommen werden kann, dass in allen Raumrichtungen von einem Partikel aus gesehen Streulicht beobachtet werden kann, so ergeben sich bei anderen Verhältnissen von Wellenlänge zu Partikelgröße andere, beispielsweise raumwinkel- oder polarisationsbezogene Intensitätsverteilungen pro reflektierendem bzw. streuendem Partikel.

Mit anderen Worten, die auf den Raumwinkel bezogene Streulichtverteilung eines Teilchens, auf welches ein das Teilchen beleuchtendes Lichtbündel fällt, ist nicht nur abhängig von der Wellenlänge des auftreffenden Lichtes, sondern gegebenenfalls auch von dem Betrachtungswinkel, der Teilchengröße, dem Brechungsindex des Teilchenmediums sowie der Polarisation der einfallenden Strahlung.

Im Bereich sehr kleiner Partikel, jeweils bezogen auf die Wellenlänge des anregenden Lichtes, überwiegt hierbei in der Regel ein elastischer Streumechanismus der auftreffenden elektromagnetischen Welle, der als Rayleigh-Streuung bezeichnet wird. In einem Bereich, in welchem die Wellenlänge des anregenden Lichts in etwa der Teilchengröße entspricht, lässt sich der Streumechanismus der elastischen Streuung der auftreffenden elektromagnetischen Welle mit der Mie-Theorie beschreiben, welche zwar eine exakte Lösung des Streuvorganges beschreibt, jedoch eine Annahme über die Teilchen-Geometrie voraussetzt (sphärische Teilchen). Bei weiter zunehmender Teilchengröße lässt sich die Streuung durch klassische geometrische Brechung an den Partikeln beschreiben.

Im Bereich der Rayleigh- und im Bereich der Mie-Streuung sind die Streuintensitäten an den Partikeln gestreuter Strahlung Funktionen unter anderem des Raumwinkels, der Teilchengröße (des Teilchenradius), der Polarisationsebene, des Streuwinkels und des komplexen Brechungsindex des Suspensionsmediums, das heißt insbesondere der Luft.

Die räumliche Verteilung des von einem Teilchen gestreuten Lichtes selbst hat hierbei Intensitätsverläufe, welche von der Betrachtungsrichtung abhängen. Während des Streuvorganges insbesondere im Bereich der Rayleigh- und der Mie-Streuung spielen in diesen Intensitätsverlauf die sich überlagernden Anteile von Beugung, Brechung und Reflexion an dem jeweiligen streuenden Partikel zusammen. Durch diesen überlagerten Streuvorgang sind dann nicht nur die Intensitätsverläufe richtungsabhängig; die Streuintensitäten variieren auch in ihren jeweiligen Polarisationsrichtungen.

Für die Detektion des Streulichtes spielt es außerdem eine Rolle, dass beispielsweise bei leistungsbezogener Streulichtdetektion die Apertur des eingesetzten optischen Sensors endlich ist. Hierdurch ist es dann erforderlich, dass auch der Detektionsraumwinkel mit berücksichtigt werden muss.

Die oben dargestellte Überlagerung der unterschiedlichen Anteile während des Streuvorganges beinhaltet somit die Überlagerung von Beugung, Brechung und Reflexion am Partikel. Hierdurch, und aufgrund der auf den Detektionsraumwinkel bezogenen Einschränkungen eines optischen Sensors, und aufgrund der Abhängigkeit unter anderem vom Teilchenradius, der Wellenlänge des beaufschlagenden Lichtes, des Brechungsindexes des umgebenden Mediums, des Streuwinkels und des Polarisationswinkels hängen die Intensitätsverläufe des von unterschiedlichen Partikelarten gestreuten Streulichtes insbesondere von der Positionierung des Sensors bezogen auf den Streulichtbereich und vor dem Sensor eventuell vorhandener Polarisationsfilter ab.

Hierbei wird sich der Umstand zu Nutze gemacht, dass die Zusammensetzung der beispielsweise bei einer bestimmten Brandart entstehenden Partikel eine charakteristische Verteilung aufweisen, welche bei Überlagerung der unterschiedlichen Streumechanismen beziehungsweise Streucharakteristika im Streulichtbereich jeweils ebenso charakteristische, positions- und polarisationsabhängige Intensitätsverteilungen ergeben.

Mit anderen Worten, die an einem bestimmten Ort um den Streulichtbereich herum gemessene Intensität des Streulichtes auf den Zeitverlauf während der Partikelentstehung, das heißt beispielsweise während eines Brandes bezogen, weist ein orts- und polarisationsbezogenes charakteristisches Muster auf.

Während es für einen einzigen Messort um den Streulichtbereich herum mit einer einzigen Polarisation noch durchaus Kollisionen zwischen charakteristischen Mustern bezogen auf unterschiedliche Partikel- und damit auf unterschiedliche Brandarten geben kann, so sinkt die Wahrscheinlichkeit derartiger musterbezogener Kollisionen bei einer Erhöhung der Messorte bzw. der detektierten Polarisationsrichtungen.

Bezogen auf die erfindungsgemäße Vorrichtung zum Detektieren von Streulichtsignalen wird die Aufgabe insbesondere dadurch gelöst, dass die Vorrichtung eine Lichtquelle, eine Mehrzahl von optischen Sensoren zum Detektieren von Streulicht und eine Auswertungseinheit zum Auswerten der von den optischen Sensoren detektierten Signale aufweist. Die Lichtquelle emittiert hierbei Licht in einen Streulichtbereich, wobei das einfallende Licht eine Einfallsachse definiert. Jeder der optischen Sensoren ist bezogen auf die Einfallsachse in einem Sensorwinkel angeordnet, um Streulicht aus dem Streulichtbereich zu detektieren. Einer der Mehrzahl von optischen Sensoren, vorzugsweise ein im Wesentlichen in einem rechten Sensorwinkel angeordneter optischer Sensor, ist als Referenzsensor ausgelegt. Die Auswertungseinheit selbst ist dazu ausgelegt, Signalverläufe der übrigen optischen Sensoren auf den Signalverlauf des Referenzsensors zu beziehen, wobei die Signalverläufe der optischen Sensoren zur Klassifizierung der Art gegebenenfalls im Streulichtbereich befindlicher Partikel dienen.

Selbstverständlich ist hierbei zu beachten, dass die Lichtquelle ein Lichtbündel mit endlich geringer Aufweitung in den Streulichtbereich emittiert; als Einfallssachse des einfallenden Lichts wird auch bei einem einfallenden Lichtbündel endlicher Aufweitung eine Vorzugsrichtung der Lichtemission der Lichtquelle, das heißt insbesondere eine Lichtrichtung größter relativer Intensität verstanden.

Die Mehrzahl von optischen Sensoren muss hierbei nicht zwingend diskret oder gar punktförmig ausgebildet sein; es kommen genauso flächige oder auch zeilenförmige Sensoren wie beispielsweise Charge Coupled Devices (CCDs) oder in CMOS-Technik gefertigte Sensoren zum Detektieren von Streulicht in Frage, solange nur eine ortsabhängige Auswertung der auftreffenden Lichtintensität ermöglicht wird. Unter einer Mehrzahl von optischen Sensoren ist somit insbesondere auch eine zeilenförmig oder flächig ausgebildete Einrichtung zu verstehen, welche beispielsweise in Form von zeilenförmig oder flächig gekoppelten Sensorpunkten eine ortsabhängige Auswertung der auftreffenden Lichtintensität ermöglicht.

Als optische Sensoren (Fotodetektoren) kommt insbesondere jede Art von lichtempfindlichen Halbleiterbauteilen wie beispielsweise Fotodioden, aber auch Fotowiderstände, Fototransistoren oder Fotomultiplier in Betracht.

Ebenso ist zu beachten, dass die Sensorwinkel der Mehrzahl von optischen Sensoren jeweils voneinander verschieden sind. Üblicherweise sind die optischen Sensoren hierbei in einer Ebene angeordnet, so dass sich die Sensorwinkel, die jeweils auf die Einfallsachse des Anregungslichtes bezogen werden, innerhalb derselben Ebene definieren lassen. In diesem Zusammenhang ist zu beachten, dass die weiter oben gemachten Ausführungen bezüglich der endlichen Aufweitung des durch die Lichtquelle ausgesandten Strahlenbündels selbstverständlich auch für die Detektionsrichtung der optischen Sensoren gilt, anhand derer der jeweilige Sensorwinkel eines einzelnen Sensors bestimmt wird.

In einem Fall, in welchem einzelne der optischen Sensoren nicht in einer gemeinsamen Ebene liegen, das heißt in einem Fall, in welchem sich insbesondere die Einfallsachse und einzelne Sensorachsen nicht schneiden (Einfallsachse und Sensorachsen sind windschiefe Geraden), ist unter dem Sensorwinkel derjenige Winkel zu verstehen, welcher zwischen derjenigen Parallele zur Einfallsachse und derjenigen Parallele zum Sensorwinkel definiert werden kann, welche sich in einem Punkt im Raum schneiden.

Weiterhin ist zu beachten, dass das Beziehen der Signalverläufe der übrigen optischen Sensoren auf den Signalverlauf des Referenzsensors zweckmäßiger Weise eine Normierung auf die Signalgröße des Referenzsensors ist. Hierbei kommt beispielsweise eine fortlaufende Normierung über den Zeitverlauf der jeweils gemessenen Signalverläufe in Frage, das heißt beispielsweise bei zeitdiskreter Signalabtastung (Sampling) ein Normieren jedes einzelnen Samples eines jeden Messsignals der übrigen optischen Sensoren auf denjenigen Sample des Signalverlaufs des Referenzsensors, welcher dem gleichen Abtastzeitpunkt entspricht.

Ein derartiges Beziehen auf den Signalverlauf des Referenzsensors, das heißt insbesondere eine derartige Normierung auf das Signal des Referenzsensors, ist jedoch auch im Rahmen einer Regression der einzelnen Messpunkte über den Zeitverlauf möglich, wobei die Steigung der Regressionsgeraden des Referenzsensors in diesem Fall auf eins festgesetzt ist. Für die übrigen Sensoren gilt dann, dass zum Durchführen der für den jeweiligen Sensor geltenden Regressionen die Signalstärken der Sensoren, welche im Idealfall proportional zur gemessenen Streulichtintensität sind, auf die Signalstärken des Referenzsensors bezogen werden, so dass sich die Steigungen der Ausgleichsgraden für die übrigen Sensoren auf die auf eins normierte Steigung des Referenzsensors beziehen.

Die erfindungsgemäße Vorrichtung zum Detektieren von Streulichtsignalen weist eine Reihe von Vorteilen gegenüber den vorbekannten Vorrichtungen auf. So ist dadurch, dass eine Mehrzahl von optischen Sensoren in unterschiedlichen Detektionswinkeln zum Einsatz kommt, eine kostengünstige und energiesparende Möglichkeit zur sicheren und genauen Klassifizierung der Art der im Streulichtbereich befindlichen Partikel gegeben. Insbesondere ist durch das Vorsehen einer Mehrzahl von optischen Sensoren gewährleistet, dass Partikelmuster, welche für bestimmte Partikelarten charakteristisch sind, sicher zugeordnet werden können. Während bei einzelnen Streulichtsensoren insbesondere dann, wenn rauschunterdrückende bzw. rauschvermindernde Regressionsverfahren zum Einsatz kommen, Musterkollisionen möglich sind, wodurch sich dann Fehlklassifizierungen ergeben, ist durch das Vorsehen der Mehrzahl von optischen Sensoren die Möglichkeit einer derartigen Musterkollision stark reduziert. Hierdurch steigt die Erkennungs- und Klassifizierungsgenauigkeit, ohne das beispielsweise teure und energetisch ungünstige Gassensoren oder dergleichen zum Einsatz kommen müssen.

Dadurch, das einer der Vielzahl von optischen Sensoren als Referenzsensor verwendet wird, das heißt das dessen detektierter Signalverlauf als Referenzsignal verwendet wird, ist eine weitgehende Unabhängigkeit der einzelnen Signalverläufe von den absoluten Streulichtintensitäten gegeben, was den Kalibrierungsaufwand vermindert und die Klassifizierung weiter vereinfacht.

Gemäß einem weiteren Aspekt der erfindungsgemäßen Lösung ist es vorgesehen, dass die Auswertungseinrichtung ferner dazu ausgelegt ist, die Signalverläufe der detektierten Signale der Mehrzahl von optischen Sensoren mit Mustersignalverläufen zu vergleichen. Ein derartiger Vergleich erfolgt vorzugsweise fortlaufend über der Zeit. Bei einem hinreichend großen Übereinstimmungsgrad der Signalverläufe der detektierten Signale mit einem der Mustersignalverläufe wird dann ein Kennzeichnungssignal ausgegeben, welches den erkannten Mustersignalverlauf kennzeichnet.

In diesem Zusammenhang ist zu beachten, dass unter dem Begriff "Mustersignalverläufe" bei einer Mehrzahl von optischen Sensoren eine Signalverlaufschar verstanden wird, das heißt der Signalverlauf über der Zeitachse eines jeden der eingesetzten Sensoren wird mit dem entsprechenden Mustersignalverlauf des entsprechenden Sensors aus der Mustersignalverlaufsschar verglichen. Selbstverständlich ist auch in diesem Fall wiederum der Begriff "Signalverlauf` bzw. "Mustersignalverlauf" nicht dahingehend einengend auszulegen, dass nur die tatsächlich aufgezeichneten Signalverläufe der einzelnen Sensoren miteinander verglichen werden sollen; ohne beispielsweise eine Signalverarbeitung dieser Signale vorzunehmen. So ist es auch in diesem Fall, in welchem die Auswertungseinrichtung zu einem selbstständigen Vergleich der Signalverläufe mit Mustersignalverläufen ausgelegt ist, denkbar, eine Regression der Signalverläufe beispielsweise nach Normierung auf das Signal des Referenzsensors vorzunehmen und die jeweiligen Steigungen der Ausgleichsgraden der detektierten Signale mit der Schar von Steigungen der Mustersignalverläufe zu vergleichen.

Die Mustersignalverläufe sind hierbei vorzugsweise mit einer gleichartigen oder ähnlichen Anordnung aus Lichtquelle und einer Mehrzahl von optischen Sensoren in Testszenarien (Testbränden und dergleichen) aufgezeichnet worden und in einem geeigneten Speicher abgelegt. Hierbei ist zu beachten, dass eine derartige Aufzeichnung der Mustersignalverläufe selbstverständlich mit der selben räumlichen Anordnung von Sensoren (oder gegebenenfalls auch mehr Sensoren) vorgenommen wird, wie später für die Auswertung in der erfindungsgemäßen Vorrichtung zum Detektieren von Streulichtsignalen zum Einsatz kommend.

Der Übereinstimmungsgrad, der dem Vergleich zugrunde gelegt wird, ist entweder vorab fest eingestellt oder durch einen Benutzer oder Bediener einstellbar. Eine Ermittlung von Übereinstimmungsgraden kann hierbei nach herkömmlichen statistischen oder sonstigen geeigneten Verfahren erfolgen, insbesondere herkömmlichen und bekannten Verfahren zum Mustervergleich und dergleichen.

Das Kennzeichnungssignal kann ein zur digitalen oder analogen Weiterverarbeitung geeignetes Signal sein, welches beispielsweise die erkannte Partikelart (das heißt die klassifizierte Brandart oder die klassifizierte Art von sonstigen Partikeln) in geeigneter Weise codiert. Im einfachsten Fall ist es jedoch auch möglich, das Kennzeichnungssignal an eine geeignete optische Anzeige auszugeben, beispielsweise ein Display oder dergleichen, an welchem dann ein Benutzer oder Bediener die Klassifikation ablesen kann. Auch ist es möglich, einen elektronischen oder elektromechanischen Schalter wie beispielsweise ein Relais oder dergleichen mit Hilfe des Kennzeichnungssignals anzusteuern, um das Vorliegen eines Brandes beispielsweise an eine weitere angeschlossene Anlage zu übermitteln.

Durch den weitgehend automatisiert ablaufenden Vergleich der detektierten Signale mit Mustersignalverläufen (bzw. einer Mustersignalverlaufsschar) ist es somit in einfacher Weise möglich, von der Brandart abhängige weitere Aktionen (Wahl eines geeigneten Löschmittels oder Inertisierungsmittels, Wahl eines geeigneten Inertisierungsniveaus usw.) gezielt auszuwählen, um effektiv gegen einen Brand vorgehen zu können. Während ein derartiger Vergleich der detektierten Signale mit Mustersignalverläufen nicht zwingend automatisiert vorgenommen werden muss, weist eine derartige automatisierte und weitgehend autonom ablaufende Klassifizierung der Brandart den Vorteil einer automatisierten, von der Brandart abhängigen Weiterverarbeitung des Signals sowie eine große Zeitersparnis für einen eventuellen Bediener oder Benutzer auf.

Gemäß einem weiteren Aspekt der Erfindung ist vorgesehen, dass die Lichtquelle im Wesentlichen monochromatisches Licht im Wellenlängenbereich von ca. 560 bis 420 Nanometern aussendet. Vorzugsweise sendet die Lichtquelle Licht im Bereich zwischen c. 470 bis ca. 450 Nanometern aus. Diese Wellenlängen entsprechen einem Spektrum von grünem bis blauem Licht. Die Verwendung von relativ kurzwelligem Licht hat hierbei den Vorteil, dass bei den in der Regel bei typischen Bränden überwiegenden Partikelgrößen vorwiegend die Rayleigh- und die Mie-Streuung vorliegen, durch welche kurzwelliges Licht wesentlich stärker gestreut wird als verhältnismäßig langwelliges Licht. Hierdurch ergibt sich eine vorteilhafte Intensitätsverteilung an den das Streulicht detektierenden optischen Sensoren.

Gemäß einem weiteren Aspekt der Erfindung ist vorgesehen, dass mindestens einer der optischen Sensoren einen Polarisationsfilter zum Polarisieren des zu detektierenden Streulichts aufweist.

Durch den Einsatz eines Polarisationsfilters an mindestens einem der optischen Sensoren kann die Gefahr von Musterkollisionen durch die zusätzliche Auswertung dieser zusätzlichen Streucharakteristik weiter vermindert werden, was die Erkennungsgenauigkeit verbessert.

In diesem Zusammenhang kann es vorgesehen sein, dass mehrere der optischen Sensoren und vorzugsweise jeder der optischen Sensoren jeweils einen Polarisationsfilter aufweist bzw. aufweisen. Hierbei sind die Polarisationsebenen von mindestens zwei Polarisationsfiltern im Wesentlichen senkrecht zueinander angeordnet. Durch das Drehen der Polarisationsebene mindestens eines Polarisationsfilters zu mindestens einen weiteren Polarisationsfilter, wobei diese Polarisationsfilter unterschiedlichen der mehreren optischen Sensoren zugeordnet sind, wird selbst dann, wenn bei einer bestimmten Partikelart die Intensitätsverteilung nur sehr wenig von der Blickrichtung, dafür aber umso mehr von der Polarisationsrichtung abhängt, sichergestellt, dass sich trotzdem ausreichend voneinander unterscheidende Signalverläufe bzw. Mustersignalverläufe ergeben, welche selbst in diesem Fall das Risiko von Musterkollisionen weiter vermindern und die Detektions- bzw. Klassifizierungsgenauigkeit nochmals erhöhen. Die durch den Einsatz der Polarisationsfilter sowie deren spezielle Ausrichtung zueinander erzielbare Genauigkeitserhöhung ist hierbei äußerst kostengünstig zu erzielen, da Polarisationsfilter einfach und billig herzustellen sind.

Gemäß einem weiteren Aspekt der Erfindung ist vorgesehen, dass jeder der optischen Sensoren im Wesentlichen in Richtung eines gemeinsamen Detektionsbereiches des Streulichtbereiches ausgerichtet ist.

Eine derartige Ausrichtung auf einen gemeinsamen Detektionsbereich, welcher eine Untermenge des Streulichtbereiches ist und in der Regel ein gemeinsames Streulichtzentrum umgibt, kann die Erkennungsgenauigkeit nochmals verbessert werden. Insbesondere wird hierdurch der Tatsache Rechnung getragen, das die Apertur der optischen Sensoren in der Regel endlich gering ist und sich somit eine vom Raumwinkel abhängige Form bzw. Ausweitung der Empfangskeule des jeweiligen optischen Sensors ergibt. Durch ein Ausrichten auf einen gemeinsamen Detektionsbereich können somit Messungenauigkeiten nochmals reduziert werden.

Gemäß einem weiteren Aspekt der Erfindung ist vorgesehen, dass einzelne oder alle optischen Sensoren als Fotodioden ausgebildet sind. Bei derartigen Halbleiterdioden wird der pn-Übergang unmittelbar mit dem zu detektierenden Streulicht beaufschlagt, wodurch die Photonen des Streulichts in dem pn-Übergang das Entstehen eines Elektronen-Loch-Paars bewirken. Derartige Fotodioden sind verhältnismäßig billig und erlauben einen einfachen schaltungstechnischen Aufbau, wodurch keine aufwendige elektronische Ansteuerung nötig ist. Je nach Betriebsart (Kennlinienart) kann eine derartige Fotodiode zudem über mehrere Größenordnung hinweg vorzugsweise im linearen Bereich betrieben werden.

Selbstverständlich ist es jedoch auch möglich, andere geeignete optische Sensoren wie beispielsweise Fototransistoren oder auch Fotomultiplier einzusetzen. Fotomultiplier besitzen eine im Vergleich zu Fotodioden um Größenordnungen höhere Empfindlichkeit und beruhen auf dem Effekt der Sekundärelektronenvervielfachung. Unter Ausnutzung des äußeren Fotoeffektes (auslösen von Elektronen aus einer Elektrodenschicht durch einfallende Photonen) werden diese ausgelösten Primärelektronen mittels einer Beschleunigungsspannung auf weitere, nachgeordnete Elektroden hin beschleunigt, an welchen ein weiteres, nunmehr von den jeweiligen beschleunigten Elektronen induziertes Auslösen von Sekundärelektronen erfolgt. Auf einer Anode werden die dort auftreffenden vervielfachten Elektronen schließlich in ihrer Menge ausgewertet und in ein weiter verarbeitbares elektrisches Signal umgewandelt.

In diesem Zusammenhang oder auch separat ist es auch denkbar, dass die Lichtquelle eine Leuchtdiode ist. Eine derartige Leuchtdiode zur Anregung des Streulichtbereiches ist sehr kostengünstig und zudem in den vorteilhaften Wellenlängenbereichen erhältlich. Für eine möglicherweise erforderliche Temperaturkompensation der erfindungsgemäßen Vorrichtung zum Detektieren von Streulichtsignalen ist es beispielsweise denkbar, eine derartige Leuchtdiode in sehr einfacher Weise gepulst zu betreiben, um die Wärmeentwicklung zu reduzieren. Selbstverständlich ist jedoch auch eine kontinuierliche Anregung - gegebenenfalls unter Inkaufnahme einer größeren Hitzeentwicklung - möglich.

Gemäß einem weiteren Aspekt der Erfindung ist vorgesehen, dass die Vorrichtung einen optischen Sensor in einem ersten Sensorwinkel, einen optischen Sensor in einem zweiten Sensorwinkel und einen optischen Sensor in einem dritten Sensorwinkel aufweist, wobei der erste Sensorwinkel ein spitzer Winkel ist und sich mit dem zweiten Sensorwinkel zu 360° ergänzt, und wobei der dritte Sensorwinkel ein stumpfer Winkel ist.

Durch diese spezielle Anordnung ist es möglich, mit verhältnismäßig wenigen Sensoren in einer besonderen räumlichen Anordnung für die einzelnen Partikelarten sehr gut voneinander unterscheidbare Muster zu erhalten. Vorzugsweise beträgt hierbei der erste Sensorwinkel etwa 45°, wodurch sich für den zweiten Sensorwinkel ein vorzugsweiser Betrag von etwa 315° ergibt. Der dritte Sensorwinkel beträgt vorzugsweise etwa 112,5°. Vorzugsweise ist der Referenzsensor in einem Sensorwinkel von etwa 90° angeordnet. Ein in einem rechten Winkel angeordneter Referenzsensor hat sich hierbei als besonders vorteilhaft für eine Normierung der Signale der jeweiligen übrigen optischen Sensoren bei einer Vielzahl von in Frage kommenden Partikelarten (Partikelbeschaffenheiten) herausgestellt.

Gemäß einem weiteren Aspekt der Erfindung ist vorgesehen, dass bei der soeben beschriebenen besonderen Anordnung des ersten, zweiten und dritten Sensors sowie des Referenzsensors der optische Sensor im ersten Sensorwinkel, der optische Sensor im zweiten Sensorwinkel und der optische Sensor im dritten Sensorwinkel sowie der Referenzsensor jeweils einen Polarisationsfilter aufweist. Die Polarisationsfilter des Referenzsensors, des optischen Sensors im ersten Sensorwinkel und des optischen Sensors im dritten Sensorwinkel sind hierbei in einer ersten Polarisationsebene zueinander ausgerichtet, während der Polarisationsfilter des optischen Sensors im zweiten Sensorwinkel in einer zweiten Polarisationsebene ausgerichtet ist, die senkrecht zur ersten Polarisationsebene ist. Eine derartige Anordnung der einzelnen Polarisationsebenen der Polarisationsfilter hat sich dahingehend als besonders vorteilhaft herausgestellt, dass die besonderen Charakteristika der einzelnen ermittelten Muster nochmals deutlicher werden, wodurch die Erkennungsgenauigkeit bzw. Klassifizierungsgenauigkeit nochmals verbessert wird.

Gemäß einem weiteren Aspekt der Erfindung ist vorgesehen, dass die Auswertungsausrichtung dazu ausgelegt ist, den Übereinstimmungsgrad durch Korrelation der Signalverläufe der Signale mit den Mustersignalverläufen zu bestimmen. Ein derartiges Korrelieren, das heißt ein Anwenden eines bekannten stochastischen Verfahrens auf die detektierten Signale bzw. auf die Mustersignale ermöglicht es, die Ähnlichkeit der detektierten Signalverläufe mit den Mustersignalverläufen auf einfache und effiziente Weise zu ermitteln, wodurch sich der Berechnungsaufwand und damit der Schaltungsaufwand in Grenzen hält und hierdurch kostengünstig möglich ist.

Genauso gut ist es jedoch auch möglich, dass die Auswertungseinrichtung dazu ausgelegt ist, den Übereinstimmungsgrad durch Distanzbestimmung der nach einer Hauptkomponentenanalyse erhaltenen Verteilung der Signalverläufe zu Clustern der Mustersignalverläufe zu bestimmen.

Eine derartige Hauptkomponentenanalyse (PCA-Analyse) bietet hierbei den Vorteil, ein nicht parametrisches Verfahren zum Extrahieren relevanter Informationen auf den Datensatz der rauschbehafteten Streulichtsignale anzuwenden, wodurch prinzipiell keine Kenntnis der mathematischen Freiheitsgrade der zugrunde liegenden Streulichtverteilung nötig ist. Hierdurch wird der Tatsache Rechnung getragen, dass durch die Ermittlung der Mustersignalverläufe mehr Dimensionen als tatsächlich benötigt aufgezeichnet werden, wobei die Hauptkomponentenanalyse dazu dient, ohne dass ein parametrisches Verfahren nötig ist, die zur Auswertung notwendigen Dimensionen zu reduzieren, um die relevanten Informationen (Hauptkomponenten) auf einfache Weise extrahieren zu können.

Genauso gut ist es jedoch auch möglich, dass die Auswertungseinrichtung dazu ausgelegt ist, den Übereinstimmungsgrad durch Auswertung der Signalverläufe der detektierten Signale und der Mustersignalverläufe in einem neuronalem Netz vorzunehmen. Dieses neuronale Netz hat vorzugsweise mindestens 38 Neuronen. Durch die Auswertung in einem neuronalem Netz ist ein einfaches "Anlernen" der erfindungsgemäßen Vorrichtung mit Mustersignalverläufen bei gleichzeitig hoher Erkennungsgenauigkeit während der Auswertung von Signalverläufen detektierter Signale möglich.

Gemäß einem weiteren Aspekt der Erfindung ist vorgesehen, dass die Mustersignalverläufe Partikelverteilungssignalverläufen von einem oder mehreren aus der Gruppe der Ereignisse von Staubemission, Dampfemission, Tabakrauchemission, Papierschwelbrand, Pappschwelbrand, offenem Papierbrand, offenem Pappebrand, ABS-Brand, n-Heptanbrand, PVC-Brand, Baumwollbrand, Holzbrand oder sonstigen Partikelemissionen entsprechen.

Hierdurch ist es möglich, Löschanweisungen oder auch automatische Lösch- oder Inertisierungsvorgänge in Abhängigkeit von einer bestimmten Gruppe typischer weise auftretender Brände ausgeben zu können. Wenn sonstige Partikelemissionen, die keinen der bestimmten Ereignisse zugeordnet werden können, detektiert werden, kann in einem solchen Fall von einem "Worst-case-szenario" ausgegangen werden und beispielsweise in jedem Fall eine Vollinertisierung oder ein Löschangriff mit allen zur Verfügung stehenden Mitteln eingeleitet werden. In allen anderen Fällen ist eine gezielte Brandbekämpfung unter Kenntnis der spezifischen Brandart möglich.

Gemäß einem weiteren Aspekt der Erfindung ist vorgesehen, dass die Vorrichtung in einem aspirativen Branddetektionssystem verwendet wird. Das aspirative Branddetektionssystem weist eine vorzugsweise ansteuerbar ausgebildete aktive Luftzufuhr zum Zuführen von zu klassifizierender Luft in den Streulichtbereich der Vorrichtung zum Detektieren von Streulichtsignalen auf. Der Einsatz in einem derartigen aspirativen Branddetektionssystem ist vor allem dann von Vorteil oder gegebenenfalls sogar vorgeschrieben, wenn beispielsweise ein umschlossener Raum ständig auf einem Grundinertisierungsniveau gehalten wird. In diesem Fall ist es möglich, dass ohne ein aspirativ arbeitendes Branddetektionssystem bei einem auftretenden Brand die Partikel den Streulichtbereich nicht erreichen. Durch eine aktive Luftzufuhr in den Streulichtbereich kann damit die Erkennungsgenauigkeit insbesondere in grundinertisierten bzw. dauerinertisierten geschlossenen Räumen verbessert werden.

Insbesondere in diesem Zusammenhang ist es ferner denkbar, dass die Vorrichtung eine Einrichtung zum Detektieren eines Mindestpartikelpegels sowie eine Einrichtung zum wahlweisen Ermöglichen der Zufuhr von zu klassifizierender Luft in den Streulichtbereich aufweist. Die Zufuhr der zu klassifizierenden Luft wird genau dann ermöglicht, wenn ein Überschreiten des Mindestpartikelpegels detektiert ist. Hierdurch ist sichergestellt, dass in Ruhe keine Luft durch den Streulichtbereich der erfindungsgemäßen Vorrichtung fließt, um die optischen Sensoren vor Verschmutzung zu schützen. Erst wenn ein Mindestrauchpegel (Mindestpartikelpegel) vorliegt, wird dann die Luftzufuhr zum Streulichtbereich freigegeben.

Es ist an dieser Stelle darauf hinzuweisen, dass das Absenken, das heißt das Reduzieren des Sauerstoffgehaltes zum Beispiel durch Einleiten eines geeigneten Inertgases wie beispielsweise Stickstoff, welches vorzugsweise mittels eines Stickstoffgenerators generiert wird, durchgeführt werden kann. Unter dem Begriff "gesteuertes Reduzieren" ist ebenso ein steuerungstechnischer wie ein vorzugsweise regelungstechnischer Vorgang zu verstehen. In einem geeigneten regelungstechnischen Verfahren, welches vorzugsweise automatisch abläuft, würde beispielsweise die Sauerstoffkonzentration des zu inertisierenden umschlossenen Raumes mittels eines geeigneten Sensors fortlaufend gemessen und kontinuierlich mit einem Soll- bzw. Vorgabewert verglichen, der durch geeignetes Einleiten von Inertgas als Zielwert erreicht werden soll. Dieser Zielwert wird von einem Inertisierungssystem mit einer erfindungsgemäßen Vorrichtung zum Detektieren von Streulichtsignalen vorzugsweise automatisch eingestellt, das heißt in Abhängigkeit von einer mittels der Vorrichtung klassifizierten Brandart wird ein zum wirksamen Löschen des spezifischen brennenden Materials geeignetes bzw. ausreichendes Inertisierungsniveau je nach Notwendigkeit festgelegt.

Es ist in diesem Zusammenhang zu erwähnen, dass das Inertisierungsniveau, d.h. die Zielsauerstoffkonzentration, in der Regel über einen gewissen Zeitraum hinweg gehalten wird, wobei sich hierfür wiederum ein regelungstechnisches System anbietet. Hierdurch kann z. B. ein Löschvorgang durch Inertisierung, der eine gewisse Zeit bis zum Abschluss braucht, durchgeführt werden.

Selbstverständlich ist es auch möglich, nach einer durch die Vorrichtung erfolgten Brandklassifikation einen derartigen Zielwert beispielsweise manuell anhand einer Tabelle zu ermitteln und manuell in ein geeignetes Inertisierungssystem einzugeben.

Gemäß einem weiteren Aspekt der Erfindung ist vorgesehen, dass das Steuersignal das Kennzeichnungssignal ist, welches einen erkannten Mustersignalverlauf kennzeichnet, und das das Inertisierungssystem ferner dazu ausgelegt ist, den reduzierten Sauerstoffgehalt automatisch einzustellen.

In Bezug auf das erfindungsgemäße Verfahren wird die Aufgabe insbesondere dadurch gelöst, dass in einem Verfahren zum Detektieren von Streulichtsignalen das Verfahren die Verfahrensschritte des Zuführens von Licht, des Detektierens von Streulicht und des vorzugsweise fortlaufenden Beziehens von Signalverläufen der optischen Sensoren auf einen Signalverlauf eines Referenzsensors aufweist. In dem Verfahrensschritt des Zuführens von Licht wird Licht vorzugsweise in einem Wellenlängenbereich von ca. 560 bis ca. 420 nm, besonders vorzugsweise von ca. 470 bis 450 nm und insbesondere aus einer Leuchtdiode in einen Streulichtbereich zugeführt. Das einfallende Licht definiert hierbei eine Einfallsachse. In dem Verfahrensschritt des Detektierens von Streulicht wird Streulicht, welches an im Streulichtbereich gegebenenfalls vorhandenen Partikeln reflektiert wird, mit einer Mehrzahl von optischen Sensoren detektiert, wobei die Mehrzahl von optischen Sensoren vorzugsweise eine Mehrzahl von Fotodioden ist, die jeweils bezogen auf die Einfallsachse in einem Sensorwinkel angeordnet sind. In Bezug auf den Verfahrensschritt des vorzugsweise fortlaufenden Beziehens von Signalverläufen der optischen Sensoren auf einen Signalverlauf eines Referenzsensors werden die Signalverläufe zum Klassifizieren der Art der gegebenenfalls im Streulichtbereich befindlichen Partikel die Signalverläufe der optischen Sensoren auf den Signalverlauf des Referenzsensors, vorzugsweise auf den Signalverlauf eines im Wesentlichen in einem rechten Sensorwinkel angeordneten Referenzsensors bezogen.

Die weiter oben im Bezug auf die erfindungsgemäße Vorrichtung beschriebenen Vorteile gelten sinngemäß auch für das erfindungsgemäße Verfahren.

Gemäß einem weiteren Aspekt der Erfindung ist in Bezug auf das Verfahren vorgesehen, dass das Verfahren weiterhin den Verfahrensschritt des vorzugsweise fortlaufenden Vergleichens von Signalverläufen der detektierten Signale mit Mustersignalverläufen unter Verwendung des Signalverlaufes des delektierten Signals des Referenzsensors aufweist und den Verfahrensschritt des Ausgebens, bei einem hinreichend großen Übereinstimmungsgrad mit einem der Mustersignalverläufe, eines Kennzeichnungssignals, vorzugsweise an eine Inertisierungsanlage zum gesteuerten Reduzieren des Sauerstoffgehaltes in einem umschlossenen Raum aufweist, wobei das Kennzeichnungssignal den erkannten Mustersignalverlauf kennzeichnet.

Im Folgenden werden Ausführungsbeispiele der erfindungsgemäßen Lösung anhand einer Zeichnung näher erläutert.

Es zeigen:
- Fig. 1:: Schematisch eine Vorrichtung zum Detektieren von Streulichtsignalen gemäß einer ersten Ausführungsform der Erfindung;
- Fig. 2:: Schematisch eine Vorrichtung zum Detektieren von Streulichtsignalen gemäß einer zweiten Ausführungsform der Erfindung;
- Fig. 3:: Signalverläufe der in der Vorrichtung gemäß Figur 1 zum Einsatz kommenden optischen Sensoren auf der in Figur 1 linken Seite während eines Detektiervorganges von Streulicht über der Zeit;
- Fig. 4:: Eine auf das Signal eines Referenzsensors bezogene Darstellung von Regressionsgeraden der Signalverläufe aus Figur 3;
- Fig. 5:: Signalverläufe analog zu Figur 3, für die in Figur 1 rechtsseitig angeordneten optischen Sensoren;
- Fig. 6:: auf denselben Referenzsensor wie in Figur 4 bezogene Regressionsgeraden analog zu Figur 4, für die in Figur 1 rechtsseitig angeordneten Sensoren;
- Fig. 7:: Die Steigungen der in Figur 4 und in Figur 6 ermittelten Ausgleichsgeraden bezogen auf den Sensorindex für die durchgeführte Partikelmessung;
- Fig. 8:: Signalverläufe analog zu Figur 3, für einen zweiten Testbrand;
- Fig. 9:: Regressionsgeraden analog zu Figur 4, für den zweiten Testbrand;
- Fig. 10:: Signalverläufe analog zu Figur 5, für den zweiten Testbrand;
- Fig. 11:: Regressionsgeraden analog zu Figur 6, für den zweiten Testbrand;
- Fig. 12:: Steigungen der Ausgleichsgeraden analog zu Figur 7, für den zweiten Testbrand;
- Fig. 13:: Signalverläufe analog zu Figur 3, für einen dritten Testbrand;
- Fig. 14:: Regressionsgeraden analog zu Figur 4, für den dritten Testbrand;
- Fig. 15:: Signalverläufe analog zu Figur 5, für den dritten Testbrand;
- Fig. 16:: Regressionsgeraden analog zu Figur 6, für den dritten Testbrand
- Fig. 17:: Steigungen der Regressionsgeraden analog zu Figur 7 für den dritten Testbrand;
- Fig. 18:: Für die Durchführung einer Hauptkomponentenanalyse geeignete Cluster-Darstellung der Sensordaten für verschieden Brandarten, Hauptkomponente 2 (PC2) über Hauptkomponente 1 (PC1);
- Fig. 19:: Cluster-Darstellung analog zu Figur 18, für eine dritte Hauptkomponente (PC3) über der ersten Hauptkomponente (PC1);
- Fig. 20:: eine Cluster-Darstellung analog zu Figuren 18 und 19, für die dritte Hauptkomponente (PC3) über der zweiten Hauptkomponente (PC2).

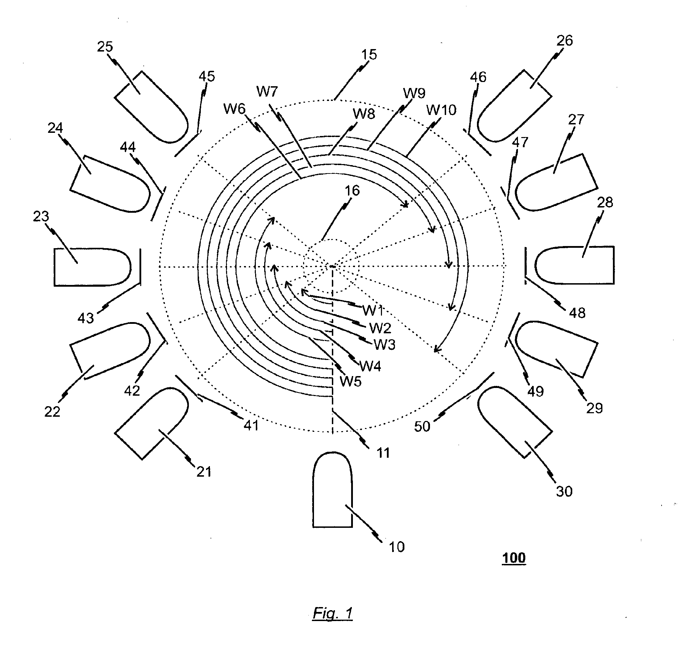

Figur 1 zeigt eine schematische Ansicht einer erfindungsgemäßen Vorrichtung 100 zum Detektieren von Streulichtsignalen in einer ersten Ausführungsform. Die Vorrichtung weist eine Lichtquelle 10 auf, welche entlang einer Einfallsachse 11 Licht in einen strichpunktiert angedeuteten Streulichtbereich 15 emittiert. Die Lichtquelle 10 ist in dem Ausführungsbeispiel aus Figur 1 als Leuchtdiode ausgebildet und emittiert demnach Licht mit einer endlich kleinen Strahlungskeule. Zweckmäßiger Weise wird die Einfallsachse 11 derart definiert, dass sie entlang der Geraden verläuft, welche bei Abbildung des Lichtkegels der Lichtquelle auf im Streulichtbereich 15 liegende senkrecht zur Papierebene aus Figur 1 verlaufende Schnittebenen die jeweiligen Mittelpunkte des Strahlungskegels verbinden würde.

Die Lichtquelle 10 sendet im wesentlichen monochromatischen Licht im Wellenlängenbereich von ca. 560 bis ca. 420nm aus (grüner bis blauer Bereich des sichtbaren Lichtes). Vorzugsweise sendet die Lichtquelle 10 Licht im Bereich von ca 470 bis ca 450nm (blauer Bereich des sichtbaren Lichtes) aus.

Licht in diesen Wellenlängenbereich wird im Vergleich zu längerwelligem Licht durch die bei den Partikeln vorherrschenden Streumechanismen (Rayleigh - bzw. Mie-Streuung) stärker gestreut, was zu im Vergleich zu längerwelligem Licht relativ hohen Signalpegeln an den Streulichtdetektoren 21, 22, 23, 24, 25, 26, 27, 28, 29, 30 führt und damit ein relativ gutes Signal-Rausch-Verhältnis zur Folge hat.

In der ersten Ausführungsform gemäß Figur 1 sind in der gleichen Ebene, in welcher auch die Lichtquelle 10 angeordnet ist, mehrere optische Sensoren 21, 22, 23, 24, 25, 26, 27, 28, 29, 30 angeordnet, welche jeweils unter einem zugehörigen (in Figur 1 mathematisch negativ angenommenen) Sensorwinkel W1, W2, W3, W4, W5, W6, W7, W8, W9, W10 bezogen auf die Einfallsachse 11 angeordnet und in Richtung eines das Zentrum des Streulichtbereiches 15 umgebenden Detektionsbereiches 16 ausgerichtet sind.

Die Sensorwinkel W1, W2, W3, W4, W5, W6, W7, W8, W9, W10 der optischen Sensoren 21, 22, 23, 24, 25, 26, 27, 28, 29, 30 sind gemäß dem ersten Ausführungsbeispiel also jeweils voneinander verschieden. Weiterhin sind die optischen Sensoren 21, 22, 23, 24, 25, 26, 27, 28, 29, 30 in einer Ebene angeordnet, d. h. gemäß der Darstellung in Figur 1 in der Papierebene. Hierdurch lassen sich die Sensorwinkel, die jeweils auf die Einfallsachse 11 des Anregungslichtes bezogen werden, innerhalb derselben Ebene definieren. In diesem Zusammenhang ist zu beachten, dass die weiter oben gemachten Ausführungen bezüglich der endlichen Aufweitung des durch die Lichtquelle 11 ausgesandten Strahlenbündels selbstverständlich auch für die Detektionsrichtung der optischen Sensoren 21, 22, 23, 24, 25, 26, 27, 28, 29, 30 gilt, anhand derer der jeweilige Sensorwinkel W1, W2, W3, W4, W5, W6, W7, W8, W9, W10 eines einzelnen Sensors 21, 22, 23, 24, 25, 26, 27, 28, 29, 30 bestimmt wird.

Abweichend hiervon ist es auch möglich, einzelne der optischen Sensoren 21, 22, 23, 24, 25, 26, 27, 28, 29, 30 nicht in einer gemeinsamen Ebene anzuordnen. Mit anderen Worten, in einem Fall, in welchem sich insbesondere die Einfallsachse 11und einzelne Sensorachsen der Sensoren 21, 22, 23, 24, 25, 26, 27, 28, 29, 30 nicht schneiden (Einfallsachse 11 und Sensorachsen sind windschiefe Geraden), ist unter dem Sensorwinkel W1, W2, W3, W4, W5, W6, W7, W8, W9, W10 derjenige Winkel zu verstehen, welcher zwischen derjenigen Parallele zur Einfallsachse 11 und derjenigen Parallele zur Sensorachse definiert werden kann, welche sich in einem Punkt im Raum schneiden.

Im ersten Ausführungsbeispiel gemäß Figur 1 ist jeder der optischen Sensoren 21, 22, 23, 24, 25, 26, 27, 28, 29, 30, die in dem Ausführungsbeispiel gemäß Figur 1 als Fotodioden ausgebildet sind, mit einem zugehörigen Polarisationsfilter 41, 42, 43, 44, 45, 46, 47, 48, 49, 50 versehen. Jeder der Polarisationsfilter 41, 42, 43, 44, 45, 46, 47, 48, 49, 50 polarisiert das auf die optischen Sensoren 21, 22, 23, 24, 25, 26, 27, 28, 29, 30 gegebenenfalls treffende Streulicht, welches von gegebenenfalls im Streulichtbereich 15 vorhandenen und zu klassifizierenden Partikeln gestreut wird, wenn das Anregungslicht aus der Lichtquelle 10 auf die Partikel trifft.

Als optische Sensoren 21, 22, 23, 24, 25, 26, 27, 28, 29, 30 (Fotodetektoren) kommen statt der Fotodioden grundsätzlich auch jede andere Art von lichtempfindlichen Halbleiterbauteilen wie beispielsweise Fotowiderstände, Fototransistoren oder Fotomultiplier in Betracht.

Die Polarisationsfilter 41, 42, 43, 44, 45, 46, 47, 48, 49 der optischen Sensoren 21, 22, 23, 24, 25, 26, 27, 28, 29 sind hierbei in einer gemeinsamen Polarisationsebene ausgerichtet, während der Polarisationsfilter 50 des optischen Sensors 30 senkrecht zu dieser gemeinsamen Polarisationsebene ausgerichtet ist.

Es ist an dieser Stelle zu erwähnen, das insbesondere bei flächigen oder zeilenförmigen Sensoren, wie oben diskutiert, derartige Polarisationsfilter auch direkt auf dem Sensorchip, dass heißt auf der Sensorchipfläche aufgebracht sein können. Mit anderen Worten, insbesondere bei integrierten flächigen oder zeilenförmigen Sensorlösungen (CDD, CMOS oder dergleichen) kann an den einzelnen Sensororten bzw. Erkennungsorten auf der Sensorfläche bzw. auf der Sensorzeile eine Schicht vorgesehen sein, welche direkt oder indirekt mit dem Sensorchip in Verbindung steht und polarisierende Wirkung hat

Der optische Sensor 23, welcher gemäß dem Ausführungsbeispiel aus Figur 1 in einem weitgehend rechten Sensorwinkel W3 angeordnet ist, dient in diesem ersten Ausführungsbeispiel als Referenzsensor, das heißt die Detektionssignale der übrigen optischen Sensoren 21, 22, 24, 25, 26, 27, 28, 29, 30 werden auf den Referenzsensor 23 bzw. dessen Signalverlauf bezogen.

Weiterhin ist zu beachten, dass das Beziehen der Signalverläufe der übrigen optischen Sensoren 21, 22, 24, 25, 26, 27, 28, 29, 30 auf den Signalverlauf des Referenzsensors 23 zweckmäßigerweise eine Normierung auf die Signalgröße des Referenzsensors 23 ist. Hierbei kommt beispielsweise eine fortlaufende Normierung über den Zeitverlauf der jeweils gemessenen Signalverläufe in Frage, das heißt beispielsweise bei zeitdiskreter Signalabtastung (Sampling) ein Normieren jedes einzelnen Samples eines jeden Messsignals der übrigen optischen Sensoren 21, 22, 24, 25, 26, 27, 28, 29, 30 auf denjenigen Sample des Signalverlaufs des Referenzsensors 23, welcher dem gleichen Abtastzeitpunkt entspricht.

Durch die verhältnismäßig große Anzahl von optischen Sensoren 21, 22, 23, 24, 25, 26, 27, 28, 29, 30 gemäß dem in Figur 1 dargestellten ersten Ausführungsbeispiel können Musterkollisionen und damit Erkennungskollisionen weitgehend vermieden werden, das heißt bei einer verhältnismäßig großen Anzahl von optischen Sensoren wie in dem ersten Ausführungsbeispiel gemäß Figur 1 können Mustersignale bzw. Mustersignalscharen mit einer hohen Genauigkeit erhalten werden.

Die an einem bestimmten Ort um den Streulichtbereich 15 herum gemessene Intensität des Streulichtes weist - beispielsweise während eines Brandes - ein orts- und polarisationsbezogenes charakteristisches Muster auf, welches mit der Vorrichtung gemäß Figur 1 sicher und einfach detektiert werden kann.

Bei herkömmlichen Vorrichtungen, die nur einen einzigen Messort um den Streulichtbereich 15 herum ohne vorgesetzten Polarisationsfilter detektieren, ist es sehr wahrscheinlich, dass durchaus Kollisionen zwischen Detektionsmustern unterschiedlicher Brandarten auftreten. Durch die im ersten Ausführungsbeispiel anhand von Figur 1 beschriebene erfindungsgemäße Vorrichtung mit einer Mehrzahl von optischen Sensoren 21, 22, 23, 24, 25, 26, 27, 28, 29, 30, wobei ein Sensor 23 ein Referenzsensor ist, sinkt die Wahrscheinlichkeit derartiger musterbezogener Kollisionen.

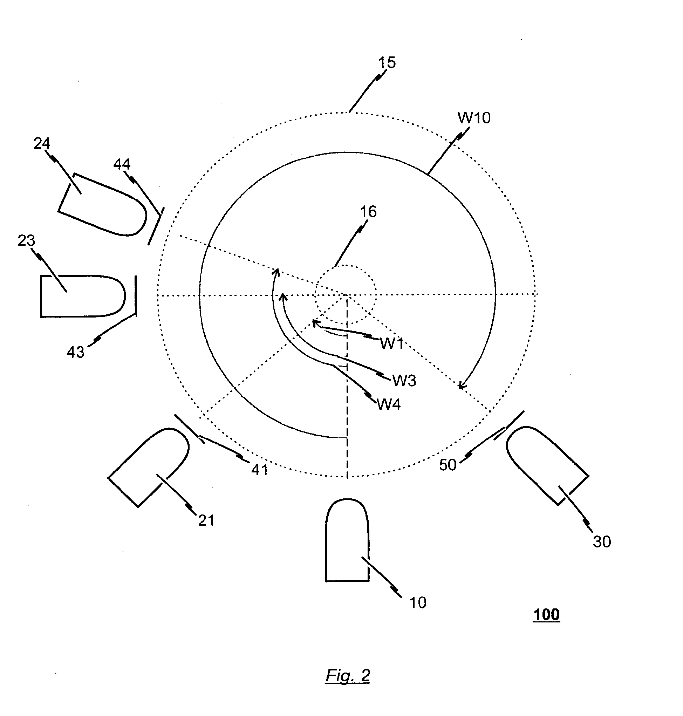

Figur 2 zeigt den schematischen Aufbau eines zweiten Ausführungsbeispiels der erfindungsgemäßen Vorrichtung 100 ähnlich wie in Figur 1, jedoch mit einer deutlich reduzierten Anzahl von optischen Sensoren.

Bezüglich des Aufbaus und der Wirkung der eingesetzten optischen Sensoren 21, 22, 23, 24, 25, 26, 27, 28, 29, 30 und der Lichtquelle 10 gelten für das zweite Ausführungsbeispiel die im Zusammenhang mit dem ersten Ausführungsbeispiel gemachten Ausführungen.

Bei der Vorrichtung 100 zum Detektieren von Streulichtsignalen sind neben der Lichtquelle 10, die wiederum als Leuchtdiode ausgebildet ist, nur vier optische Sensoren 21, 23, 24, 30 vorgesehen, welche in zugehörigen Sensorwinkeln wie W1, W3, W4, W10 um das Streulichtzentrum 15 angeordnet sind. Der in einem im Wesentlichen im rechten Sensorwinkel W 3 angeordnete optische Sensor 23 dient wiederum als Referenzsensor. Auch im zweiten Ausführungsbeispiel sind alle optischen Sensoren 21, 23, 24, 30 mit entsprechend zugeordneten Polarisationsfiltern 41, 43, 44, 50 versehen.

Der optische Sensor 21 ist hierbei in einem spitzen Winkel W1 von vorzugsweise etwa 45° angeordnet; ihm auf die Lichtquelle 10 bezogen gegenüber angeordnet ist der Sensor 30 in einem Winkel W10 von vorzugsweise ca. 315°, so dass sich der spitze Winkel W 1 und der Winkel W 10 zu einem Vollwinkel, das heißt zu 360° ergänzen. Der optische Sensor 24 ist in einem stumpfen Winkel W 4 angeordnet, wobei der stumpfe Winkel W 4 vorzugsweise etwa 112,5° beträgt. Während die Polarisationsfilter 41, 43, 44 der optischen Sensoren 21, 23, 24 in derselben Polarisationsebene ausgerichtet sind, ist die Polarisationsebene des Polarisationsfilters 50 des optischen Sensors 30 demgegenüber um 90° gedreht. Mit der speziellen Ausführung gemäß dem zweiten Ausführungsbeispiel aus Figur 2 können trotz reduzierter Sensorzahl signifikant charakteristische Mustersignalverläufe bzw. Mustersignalverlaufsscharen ermittelt werden bzw. eine Detektion von Streulichtsignalen, ggf. mit automatischer Klassifikation durch Mustervergleich mit einer der Mustersignalverlaufsscharen mit hoher Erkennungs- bzw. Klassifizierungsgenauigkeit durchgeführt werden.

In den Figuren 1 und 2 jeweils nicht dargestellt ist eine Auswertungseinrichtung zum Auswerten der von den optischen Sensoren 21, 22, 23, 24, 25, 26, 27, 28, 29, 30 detektierten Signale, welche die unter Bezugnahme auf die Darstellungen in den nachfolgenden Figuren dargestellte Normierung der Signalverläufe der Sensoren auf den Signalverlauf eines Referenzsensors (in den Ausführungsbespielen gemäß Figuren 1 und 2 der Referenzsensor 23) vorzunehmen.

Zweckmäßigerweise wird eine solche Auswertungseinheit eine digitale Auswertungseinheit, insbesondere ein Mikrocomputer, ein eingebettetes System oder dergleichen sein. In diesem Fall ist durch die Wahl geeigneter Analog-DigitalUmsetzer sicherzustellen, dass bei einem Abtastvorgang der Signalwerte der optischen Sensoren eine ausreichende Amplitudenauflösung gegeben ist. Weiterhin ist selbstverständlich mit einer ausreichend hohen Abtastrate abzutasten, um Aliasingeffekte zu vermeiden.

Eine derartige in den Figuren 1 und 2 nicht dargestellte Auswertungseinheit ist vorzugsweise dazu ausgelegt, die detektierten Signale der optischen Sensoren (21, 22, 23, 24, 25, 26, 27, 28, 29, 30) vorzugsweise fortlaufend mit den in den nachfolgenden Figuren dargestellten Mustersignalverläufen zu vergleichen. Bei einem hinreichend großen Übereinstimmungsgrad mit einem der Mustersignalverläufe zu vergleichen. Bei einem hinreichend großen Übereinstimmungsgrad mit einem der Mustersignalverläufe kann eine derartige entsprechend ausgelegte Auswertungseinreichung vorzugsweise ein Kennzeichnungssignal ausgeben, welches den erkannten Mustersignalverlauf kennzeichnet.

Eine Ausgabe eines derartigen Kennzeichnungssignals kann vorzugsweise an eine ebenfalls nicht dargestellte einfache optische Anzeige (Leuchtdiode oder optisches Display oder dergleichen) oder eine Relais-Steuerung erfolgen. Weiterhin ist es möglich, das Kennzeichnungssignal an ein in den Figuren 1 und 2 ebenfalls nicht dargestelltes Inertisierungssystem auszugeben, welches anhand einer entsprechend in dem Kennzeichnungssignal geeignet kodierten automatisch klassifizierten Brandart ein zu der passenden Brandart passendes Inertisierungsverfahren ausführt.

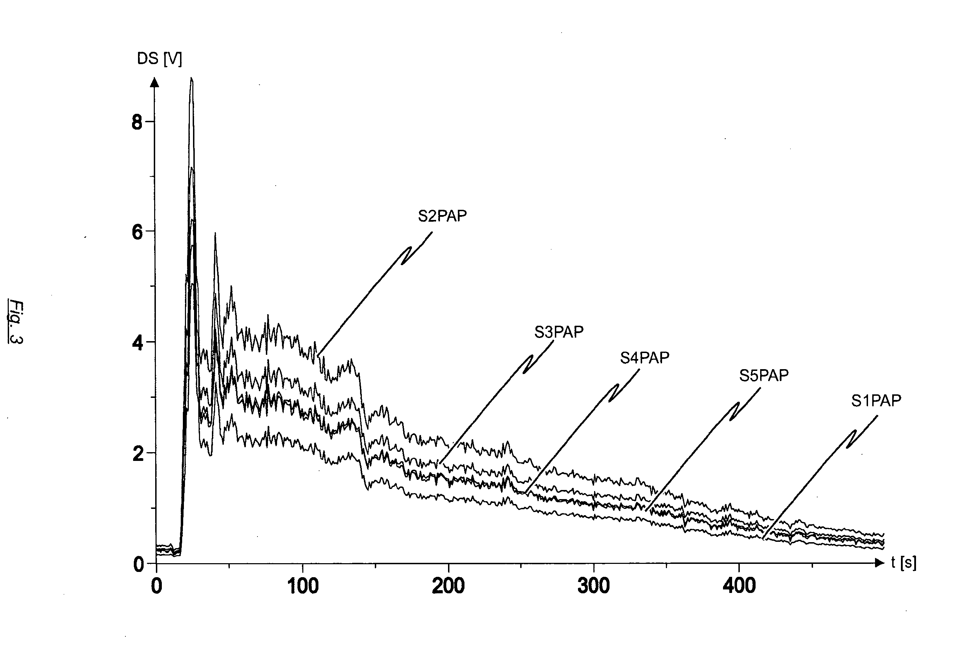

Figur 3 zeigt ein Signalverlaufsdiagramm der optischen Sensoren 21, 22, 23, 24, 25 aus dem ersten Ausführungsbeispiel gemäß Figur 1 während einer ersten Testmessung über der Zeitachse. Dargestellt sind hier die Ausgangsspannungen bzw. Detektionsspannungen DS der optischen Sensoren 21, 22, 23, 24, 25. Die in Figur 3 dargestellte erste Testmessung wurde mit der Vorrichtung gemäß dem ersten Ausführungsbeispiel während eines offenen Brandes von Papier durchgeführt, um charakteristische Mustersignalverläufe der in Figur 1 linksseitig der Einfallsachse angeordneten optischen Sensoren 21, 22, 23, 24, 25 zu erhalten. Dem optischen Sensor 21 ist hierbei der mit S1 PAP bezeichnete Signalverlauf zugeordnet; analog entsprechen die Signalverläufe S2 PAP, S3 PAP, S4 PAP und S5 PAP den von den optischen Sensoren 22, 23, 24, 25 ausgegebenen Messsignalen in einem Zeitraum von 0 bis etwa 500 Sekunden. Es ist an dieser Stelle darauf hinzuweisen, dass selbstverständlich bei Wahl einer ausreichend hohen Abtastrate auch zeitdiskrete Signalverlaufsmessungen vorgenommen werden können, um die Signalverläufe in einem digitalen Verarbeitungssystem einfach weiterverarbeiten zu können.

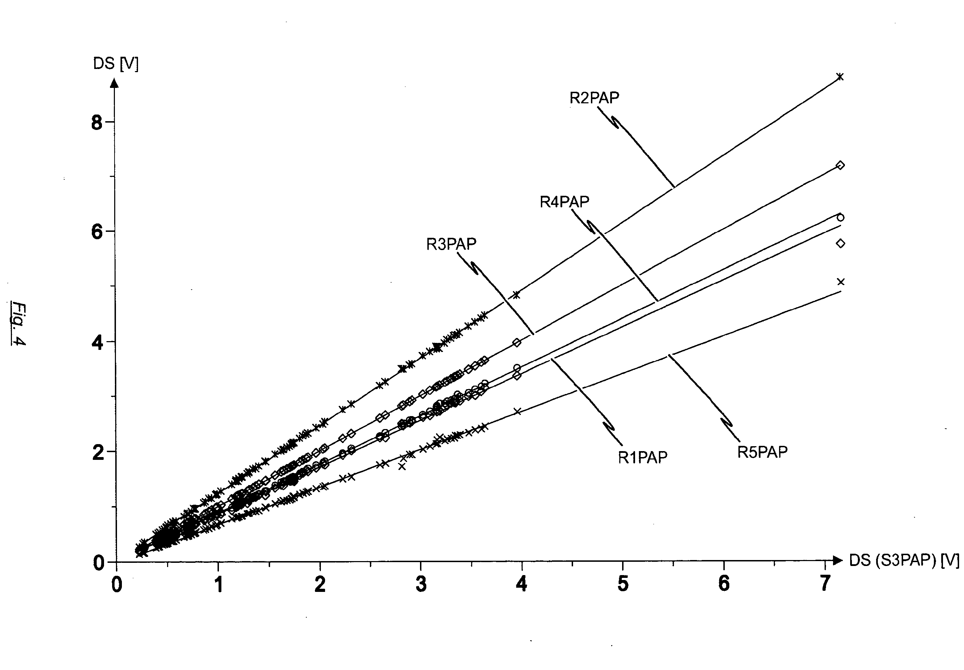

In Figur 4 sind die zu Figur 3 gehörigen Regressionsgeraden nach dem Beziehen der einzelnen Messpunkte aus Figur 3 auf das Ausgangssignal S3 PAP des Referenzsensors 23 dargestellt. Nach der somit erfolgten Normierung der Messsignale auf das Ausgabesignal des Referenzsensors 23 beträgt die Steigung von dessen Ausgleichsgerade R3 PAP eins, während die Steigungen der übrigen Ausgleichsgeraden R1 PAP, R2 PAP, R4 PAP und R5 PAP, welche sich auf die optischen Sensoren 21, 22, 24 und 25 beziehen, von eins verschieden sind.

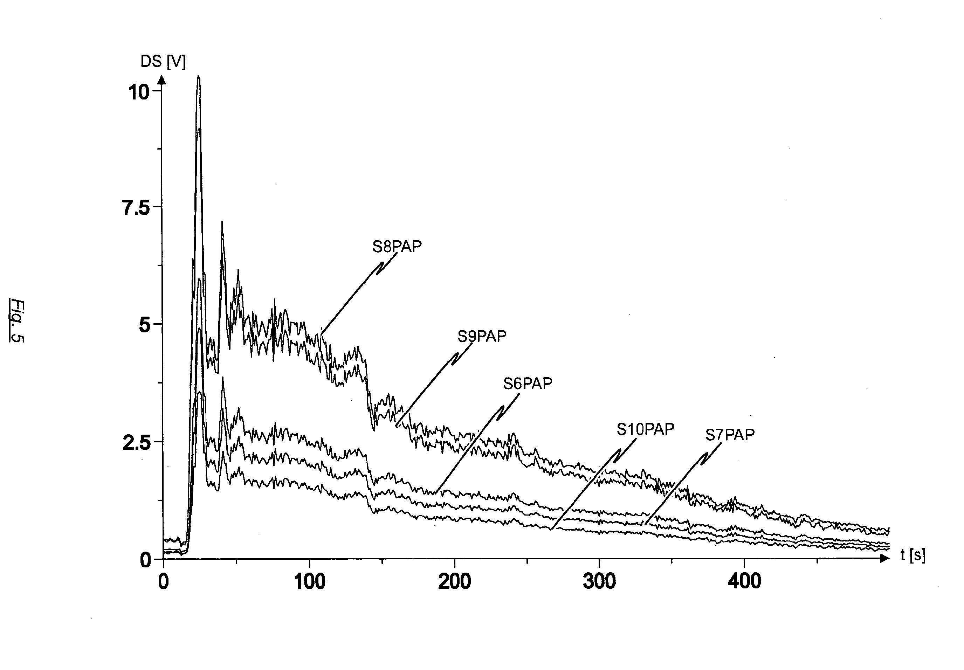

In Figur 5 sind die Signalverläufe der in Figur 1 rechtsseitig von der Einfallsachse 11 liegenden optischen Sensoren 26, 27, 28, 29, 30 gezeigt, und zwar ebenfalls während einer ersten Testmessung während des oben erwähnten offenen Papierbrandes. Die Signalverläufe S6 PAP, S7 PAP, S8 PAP, S9 PAP und S10 PAP entsprechen hierbei den Signalverläufen, welche von den optischen Sensoren 26, 27, 28, 29, 30 ausgegeben werden.

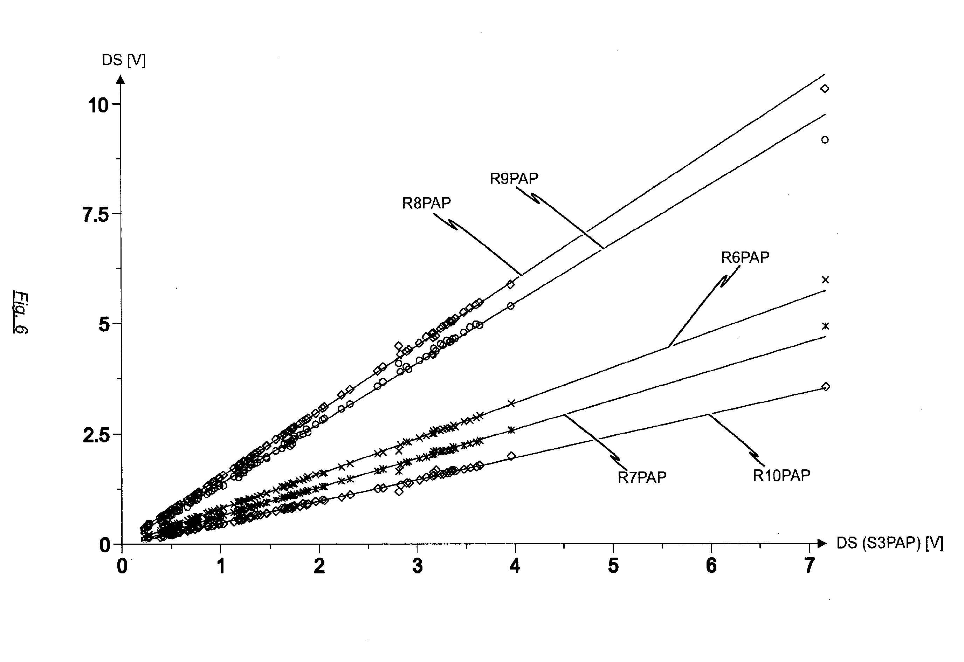

In Figur 6 sind wiederum die zugehörigen Regressionsgeraden R6 PAP, R7 PAP, R8 PAP, R9 PAP und R10 PAP dargestellt, welche wiederum - analog zu der Darstellung aus Figur 4 - auf den Detektionssignalverlauf des Referenzsensors 23 (das heißt auf den Signalverlauf S3 PAP) bezogen sind.

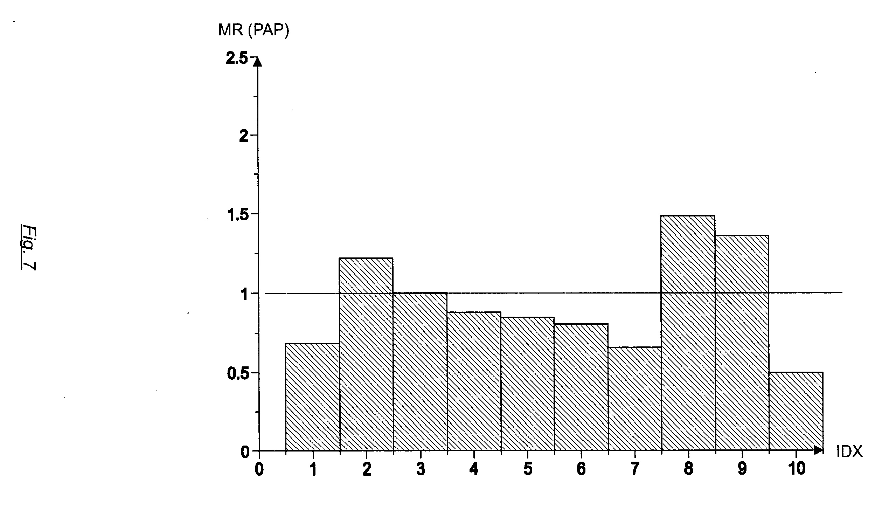

In Figur 7 ist schließlich das zugehörige Verteilungsmuster der Regressionsgeraden aus den Figuren 4 und 6 während der Messung des Streulichtes, wie es bei einem Papierbrand auftritt, gezeigt. Die Steigungen MR der Regressionsgeraden aus den Figuren 4 und 6 sind in Figur 7 als Balkendiagramm über dem Sensorindex IDX dargestellt, wobei die Sensorindizes 1 bis 10 den optischen Sensoren 21 bis 30 entsprechen.

Das in Figur 7 erhaltene Muster ist charakteristisch für die Streulichtverteilung während eines Papierbrandes und kann für nachfolgende Mustervergleiche, insbesondere und vorzugsweise auch automatische Mustervergleiche in einer entsprechend ausgelegten Auswertungseinrichtung, zum Einsatz kommen. Insbesondere kann auch dann, wenn für einen späteren realen Messvorgang eine Vorrichtung gemäß dem zweiten Ausführungsbeispiel aus Figur 2 mit reduzierter Sensorzahl zum Einsatz kommt, die Musterverteilung aus Figur 7 (mit korrekt zugeordneten Sensorindizes IDX) herangezogen werden. So wurde festgestellt, dass insbesondere bei der speziellen Sensoranordnung gemäß dem zweiten Ausführungsbeispiel aus Figur 2 die Sensorsignale der optischen Sensoren 21, 23, 24 und 30, welche den Sensorindizes 1, 3, 4 und 10 entsprechen, bei Normierung auf den Signalverlauf des Referenzsensors 23 (Sensorindex 3) ausreichen, um die Brandart mit hinreichend hoher Genauigkeit zu klassifizieren.

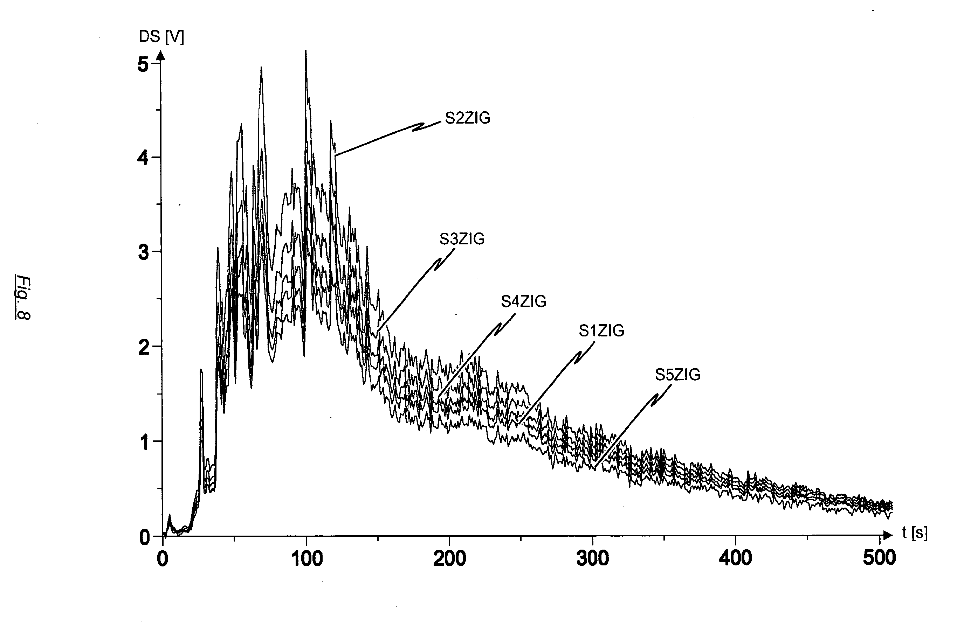

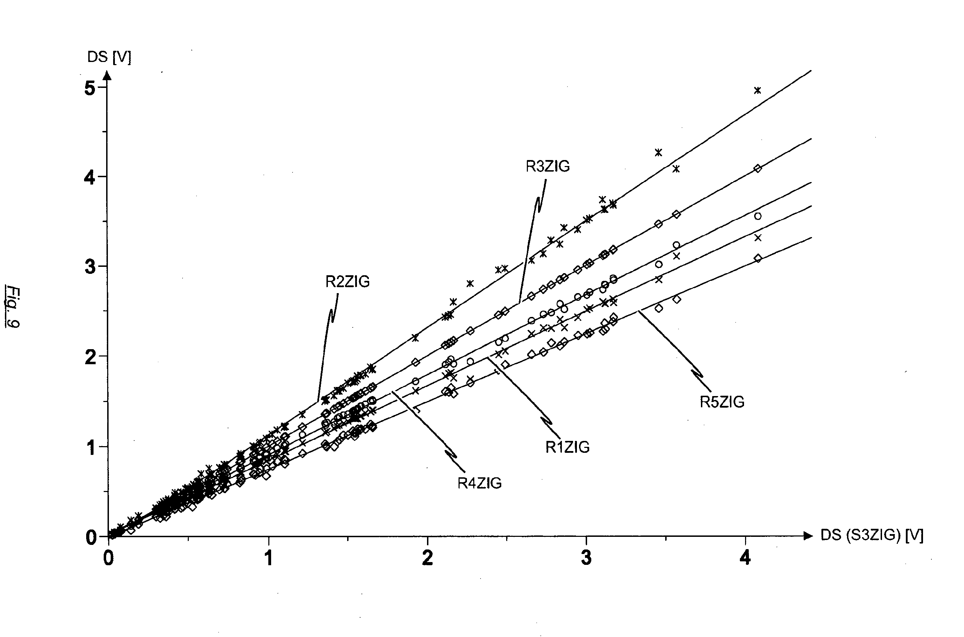

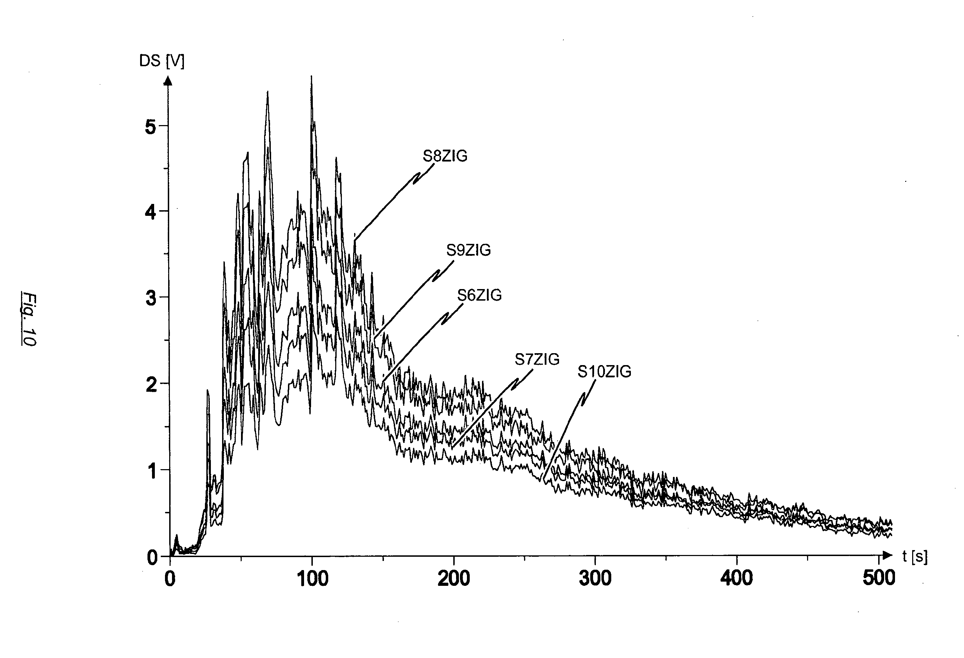

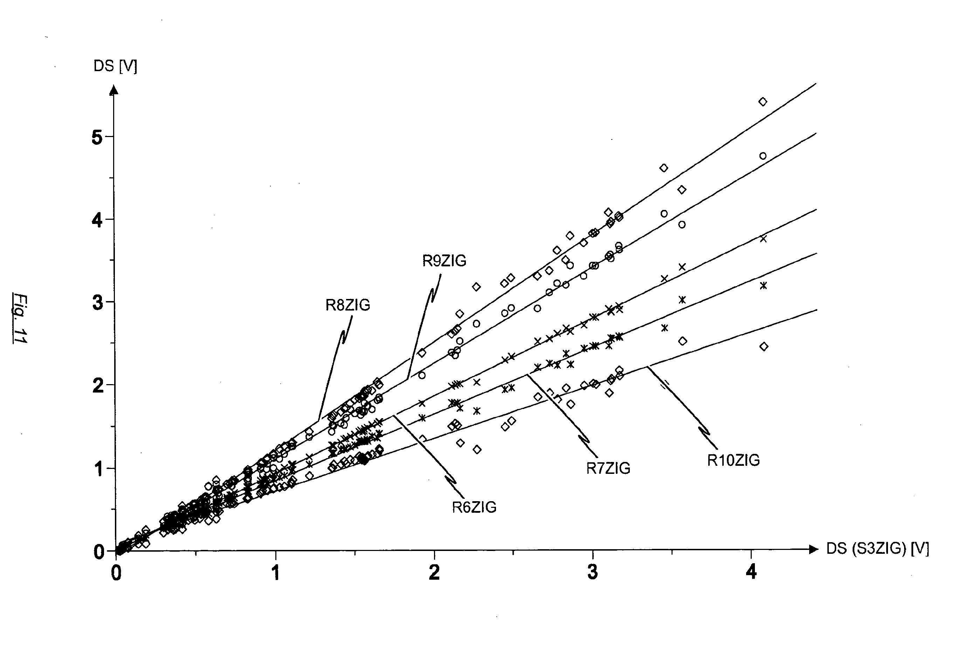

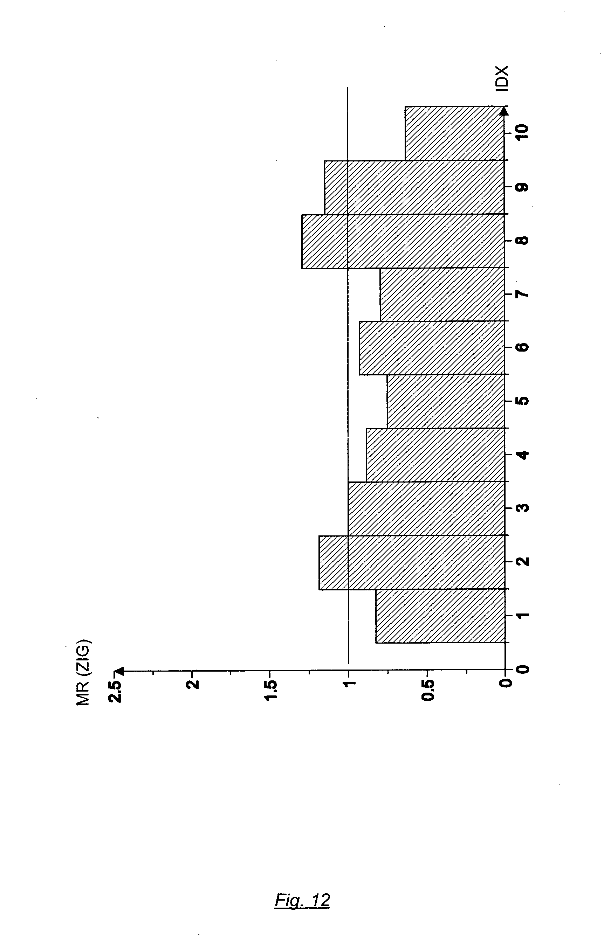

In den Figuren 8 bis 12 bzw. 13 bis 17 sind Mustersignalverläufe, deren Regressionsgeraden sowie deren steigungsbezogene Musterverteilungen für eine zweite Testmessung (Zigarettenbrand, ZIG) und eine dritte Testmessung (PVC-Brand PVC) dargestellt. Im Einzelnen zeigen die Figuren 8 bzw. 10 die Signalverläufe während der zweiten Testmessung während eines Zigarettenbrandes über der Zeit in einem Zeitraum von 0 bis etwa 500 Sekunden, jeweils getrennt für die in Figur 1 linksseitigen optischen Sensoren 21, 22, 23, 24, 25 und die in Figur 1 rechtsseitigen optischen Sensoren 26, 27, 28, 29, 30 mit den zugehörigen (linksseitigen) Regressionsgeraden in Figur 9 und den (rechtsseitigen) Regressionsgeraden in Figur 11. Die Regression wird wiederum bezogen auf das Sensorsignal des als Referenzsensor dienenden optischen Sensors 23 (Signalverlauf S 3 ZIG) durchgeführt. Das für einen Zigarettenbrand charakteristische Muster aus Figur 12 unterschiedet sich hierbei bereits bei einem rein optischen Vergleich deutlich von dem für einen Papierbrand charakteristischen Muster aus Figur 7, was die gute Eignung der erfindungsgemäßen Vorrichtung zum Detektieren von Streulichtsignalen, bei welcher die Signalverläufe der optischen Sensoren zur Klassifizierung der Art ggf. im Streulichtbereich 15 befindlicher Partikel dienen, zeigt. Auch hierbei fällt wiederum auf, dass bereits der Verlauf der Steigungen für die reduzierte Anzahl von Sensoren gemäß dem zweiten Ausführungsbeispiel aus Figur 2 (nur Sensorindizes 1, 3, 4 und 10 werden berücksichtigt) ausreicht, um die Brandart mit hoher Genauigkeit klassifizieren zu können.

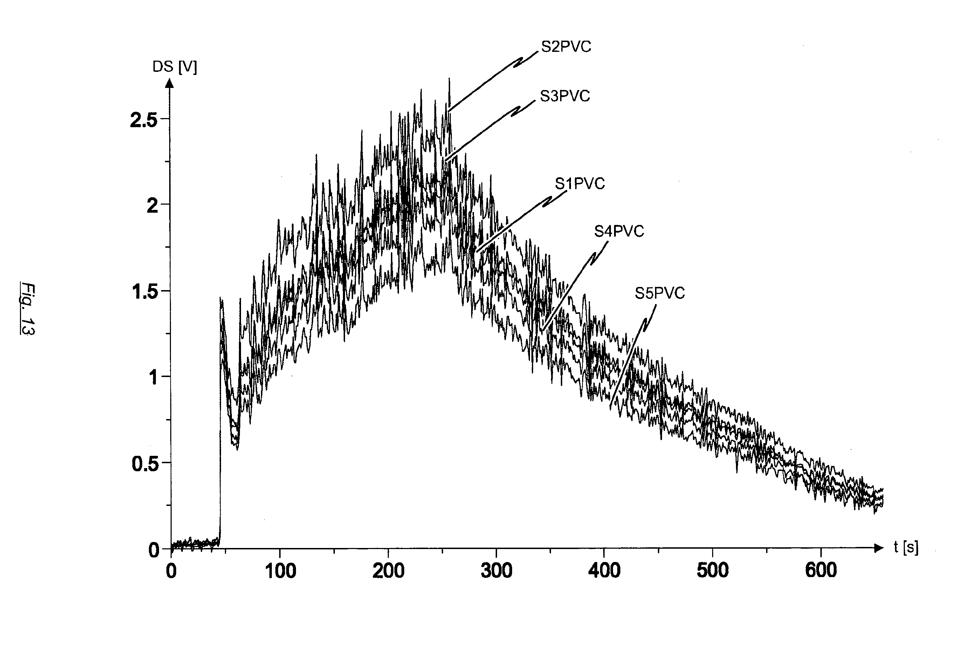

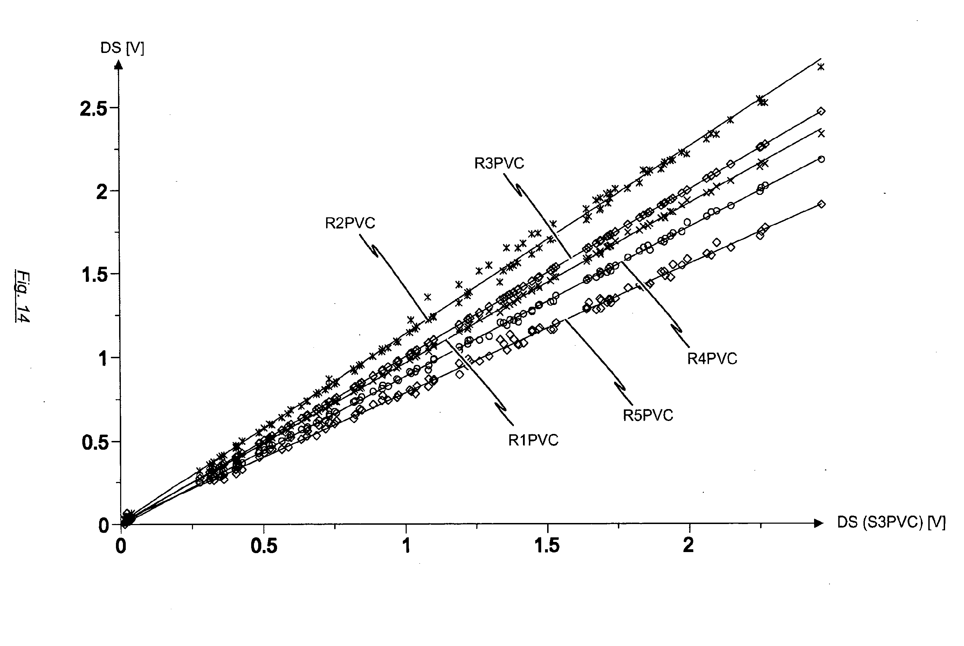

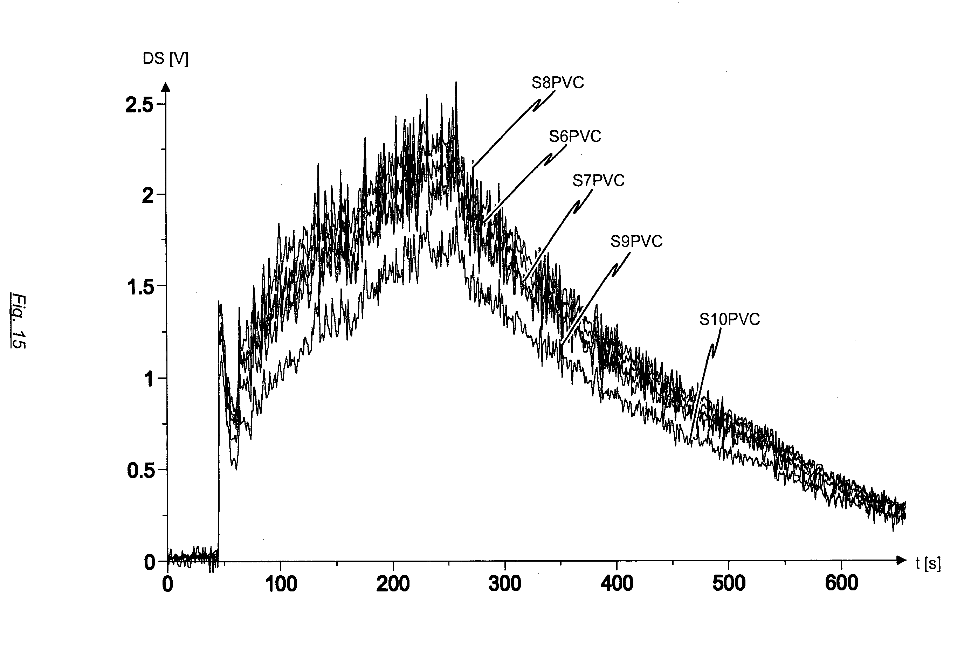

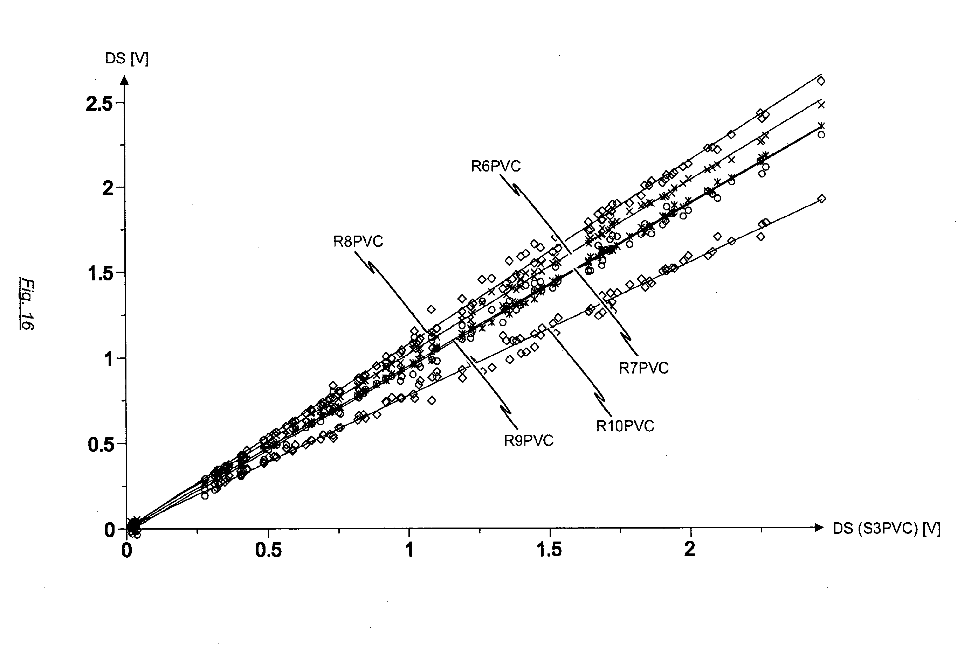

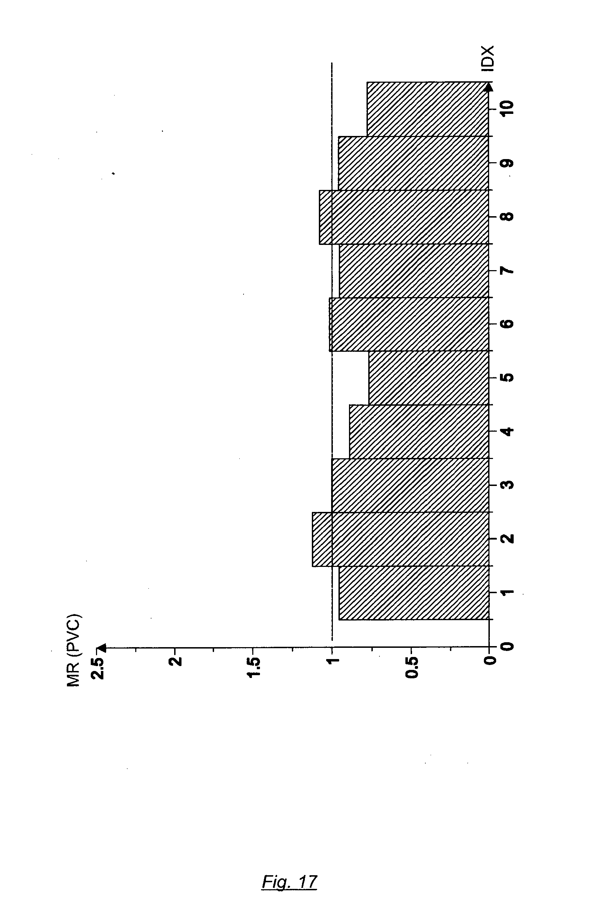

Die Figuren 13 und 15 zeigen wiederum Signalverläufe der linksseitigen bzw. rechtsseitigen Sensoren während der Testmessung während eines PVC-Brandes mit deren zugehörigen (wiederum auf das Detektionssignal des als Referenzsensor dienenden optischen Sensors 23 bezogenen) Regressionsgeraden in den Figuren 14 bzw. 16. Ein Vergleich des in Figur 17 dargestellten Musters der Steigungen MR der Regressionsgeraden während eines PVC-Brandes zeigt beim Vergleich mit den Figuren 7 und 12 wiederum die deutlich unterschiedlichen Streulichtcharakteristiken, welche eine hohe Detektions- und Klassifizierungsgenauigkeit erlauben.

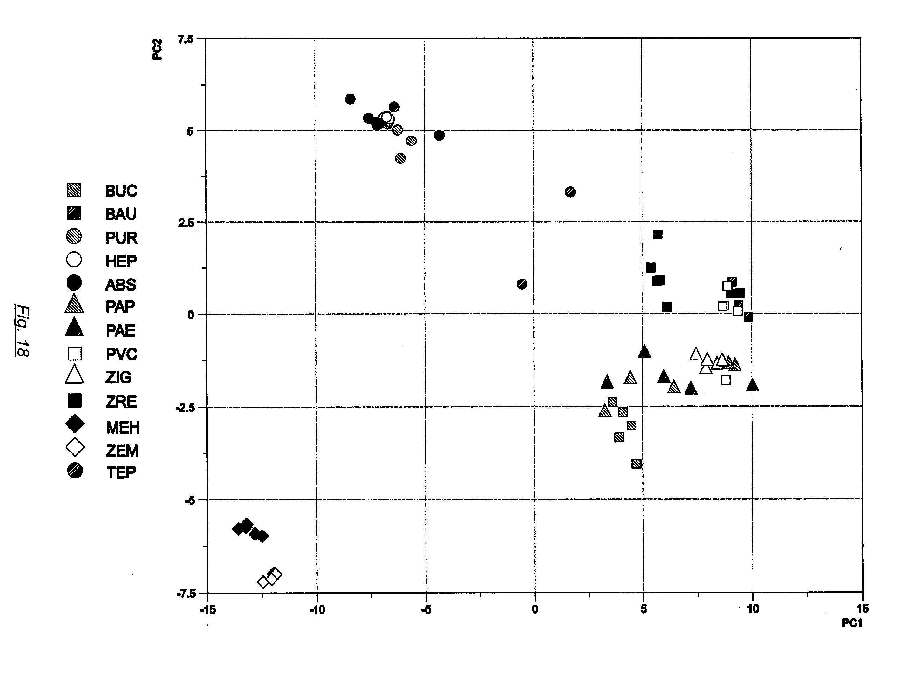

In den Figuren 18 bis 20 ist eine von den Regressionsgeraden verschiedene weitere Auswertungsmöglichkeit der Messsignale mittels einer Hauptkomponentenanalyse (Principal Component Analysis, PCA) klargestellt.

Das Anwenden einer Hauptkomponentenanalyse ist im vorliegenden Fall besonders vorteilhaft, da eine parametrische Herangehensweise eine komplizierte und rechenaufwendige Einsicht in den Aufbau des mathematischen Systems aus Lichtquelle und Streulichtsensoren voraussetzen würde. Mithilfe der Hauptkomponentenanalyse (PCA) ist eine rein auf statistischen Methoden basierende Dimensionsreduzierung zu erzielen.

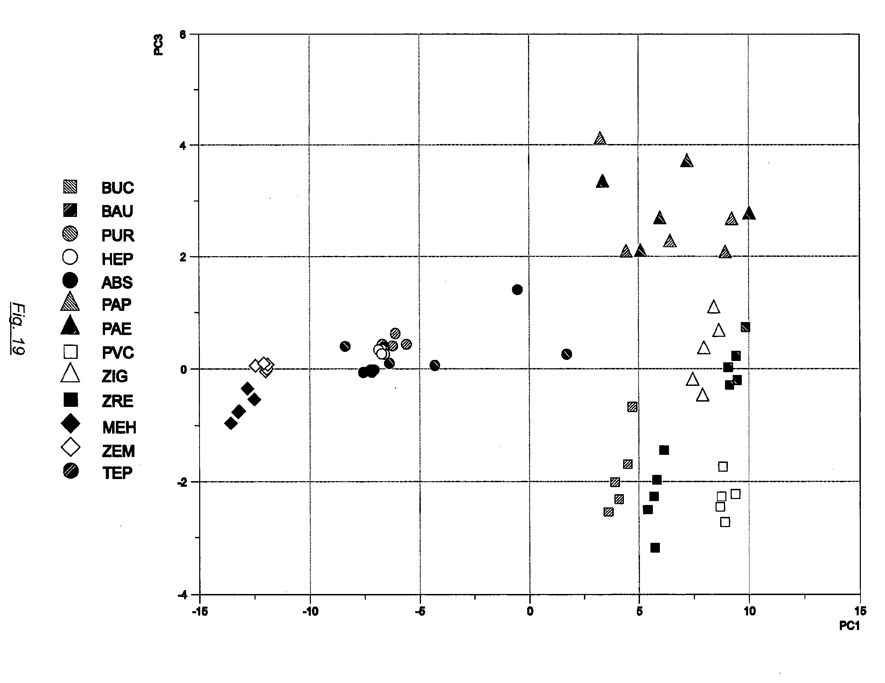

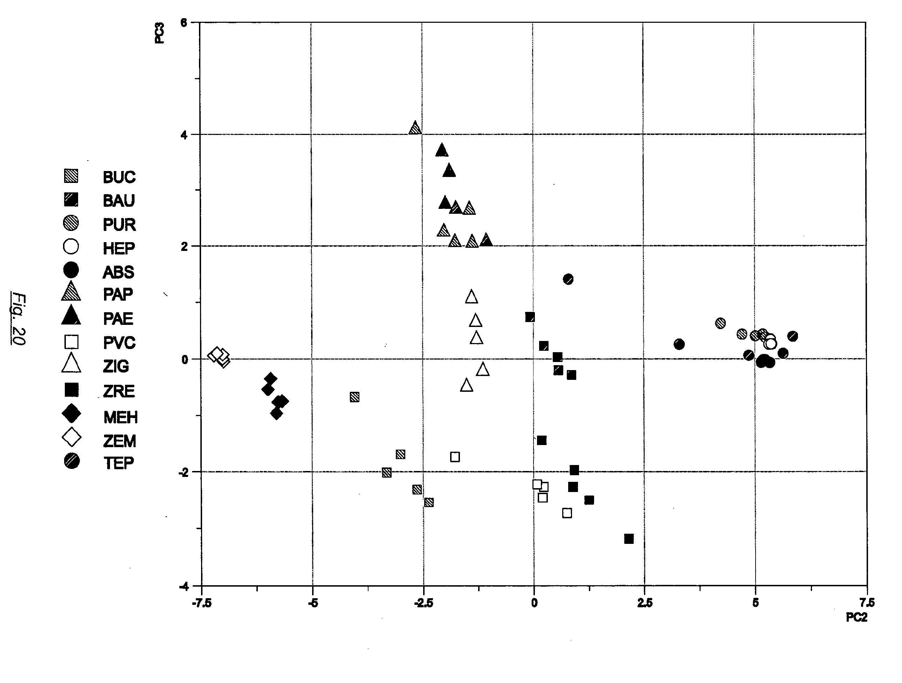

In den Figuren 18 bis 20 sind einzelne Cluster BUC, BAU, PUR, HEP, ABS, PAP, PAE, PVC, ZIG, ZRE, MEH, ZEM, TEP von Mustersignalverläufen nach einer Hauptkomponentenanalyse mit Reduktion auf drei Hauptkomponenten PC1, PC2, PC3 dargestellt, wobei in Figur 18 Hauptkomponente 2 (PC2) gegen Hauptkomponente 1 (PC1), in Figur 19 Hauptkomponente 3 (PC3) gegen Hauptkomponente 1 (PC1) und in Figur 20 Hauptkomponente 3 (PC3) gegen Hauptkomponente 2 (PC2) abgebildet sind. Die einzelnen Cluster BUC, BAU, PUR, HEP, ABS, PAP, PAE, PVC, ZIG, ZRE, MEH, ZEM, TEP entsprechen hierbei Charakteristika folgender Brandarten:

| **Cluster** | **Brandart** |
|---|---|
| BUC | Buchenholz |
| BAU | Baumwolle |
| PUR | PUR |
| HEP | n-Heptan |
| ABS | ABS |
| PAP | Papier |
| PAE | Pappe |
| PVC | PVC |
| ZIG | Zigarette |
| ZRE | Zigarre |
| MEH | Mehlstaub |
| ZEM | Zementstaub |
| TEP | Teppich |

Wenn Messungen realer Brände mit der erfindungsgemäßen Vorrichtung zum Detektieren von Streulichtsignalen vorgenommen werden, so erfolgt eine Auswertung anhand der Cluster aus den Figuren 18 bis 20 mittels einer Hauptkomponentenanalyse durch eine Distanzbestimmung der nach einer Hauptkomponentenanalyse erhaltenen Verteilung der Signalverläufe der detektierten Signale (gemessene Cluster) zu Clustern der Mustersignalverläufe aus den Figuren 18 bis 20 (Muster-Clustern).

Die Hauptkomponentenanalyse bietet hierbei den Vorteil einer relativ einfach möglichen Dimensionsreduktion mit der damit einhergehenden vorteilhaften Rauschreduktion, wodurch im Wesentlichen nur für die Brandklassifizierung bzw. Partikelklassifizierung relevante Signalanteile betrachtet werden.

An dieser Stelle sei darauf hingewiesen, dass alle oben geschriebenen Teile für sich alleine gesehen und in jeder Kombination, insbesondere die in den Zeichnungen dargestellten Details als Erfindungswesentlich beansprucht werden. Abänderungen hiervon sind dem Fachmann geläufig.

### Bezugszeichenliste

- 10: Lichtquelle
- 11: Einfallsachse
- 15: Streulichtbereich
- 16: Detektionsbereich
- 21, 22, 23, 24, 25, 26, 27, 28, 29, 30: Optische Sensoren
- 41, 42, 43, 44, 45, 46, 47, 48, 49, 50: Polarisationsfilter
- 100: Vorrichtung zum Detektieren von Streulichtsignalen
- DS: Detektionssignal
- S1PAP, S2PAP, S3PAP, S4PAP S5PAP,:
- S6PAP, S7PAP, SBPAP, S9PAP, S10PAP,:
- S1ZIG, S2ZIG, S3ZIG, S4ZIG, S5ZIG,:
- S6ZIG, S7SIG, S8ZIG, S9ZIG, S10ZIG,:
- S1PVC, S2PVC, S3PVC, S4PVC, SSPVC,:
- S6PVC, S7PVC, S8PVC S9PVC, S10PVC: Sensorsignale
- R1PAP, R2PAP, R3PAP, R4PAP, R5PAP,:
- R6PAP, R7PAP, RBPAP, R9PAP, R10PAP,:
- R1ZIG, R2ZIG, R3ZIG, R4ZIG, R5ZIG,:
- R6ZIG, R7ZIG, R8ZIG, R9ZIG, R10ZIG,:
- R1PVC, R2PVC, R3PVC, R4PVC, R5PVC,:
- R6PVC, R7PVC, R8PVC, R9PVC R10PVC: Regressionsverläufe
- MR: Steigung der Regressionsverläufe
- IDX: Sensorindizes
- BUC, BAU, PUR, HEP,:
- ABS, PAR, PAE, PVC, ZIG, ZRG, MEH, ZEM, TEP: Signalverlaufscluster
- W1, W2, W3, W4, W5, W6, W7, W8, W9, W10: Sensorwinkel

## Patentansprüche

1. Vorrichtung (100) zum Detektieren von Streulichtsignalen, wobei die Vorrichtung Folgendes aufweist:
- einer Lichtquelle (10);
- eine Mehrzahl von optischen Sensoren (21, 22, 23, 24, 25, 26, 27, 28, 29, 30) zum Detektieren von Streulicht; und
- eine Auswertungseinrichtung zum Auswerten der von den optischen
Sensoren detektierten Signale,
wobei die Lichtquelle (10) Licht in einen Streulichtbereich (15) emittiert, wobei das einfallende Licht einer Einfallsachse (11) definiert, wobei jeder der optischen Sensoren (21, 22, 23, 24, 25, 26, 27, 28, 29, 30) bezogen auf die Einfallsachse (11) in einem Sensorwinkel (W1, W2, W3, W4, W5, W6, W7, W8, W9, W10) angeordnet ist, um Streulicht aus dem Streulichtbereich (15) zu detektieren,
**dadurch gekennzeichnet, dass**
einer der Mehrzahl von optischen Sensoren (21, 22, 23, 24, 25, 26, 27, 28, 29, 30) ein Referenzsensor ist, wobei die Auswertungseinheit dazu ausgelegt ist, Signalverläufe der übrigen optischen Sensoren (21, 22, 23, 24, 25, 26, 27, 28, 29, 30) auf den Signalverlauf des Referenzsensors zu beziehen, wobei die Signalverläufe der optischen Sensoren (21, 22, 23, 24, 25, 26, 27, 28, 29, 30) zur Klassifizierung der Art gegebenenfalls im Streulichtbereich (15) befindlicher Partikel dienen.

2. Vorrichtung (100) nach Anspruch 1,
wobei ein im Wesentlichen in einem rechten Sensorwinkel (W3) angeordneter optischer Sensor (23) der Mehrzahl von optischen Sensoren (21, 22, 23, 24, 25, 26, 27, 28, 29, 30) der Referenzsensor ist.

3. Vorrichtung nach Anspruch 1 oder 2, wobei die Auswertungseinrichtung ferner dazu ausgelegt ist, die Signalverläufe der detektierten Signale der Mehrzahl von optischen Sensoren (21, 22, 23, 24, 25, 26, 27 28, 29, 30) mit Mustersignalverläufen zu vergleichen und bei einem hinreichend großen Übereinstimmungsgrad mit einem der Mustersignalverläufe ein Kennzeichnungssignal auszugeben, welches den erkannten Mustersignalverlauf kennzeichnet.

4. Vorrichtung nach einem der Ansprüche 1 bis 3, wobei die Lichtquelle (10) im Wesentlichen monochromatisches Licht in einem Wellenlängenbereich von ca. 560 bis ca. 420 nm, aussendet.

5. Vorrichtung nach einem der vorherigen Ansprüche, wobei mindestens einer der optischen Sensoren (21, 22, 23, 24, 25, 26, 27, 28, 29, 30) einen Polarisationsfilter (41, 42, 43, 44, 45, 46, 47, 48, 49, 50) zum Polarisieren des zu detektierenden Streulichts aufweist.

6. Vorrichtung nach Anspruch 5, wobei mehrere der optischen Sensoren (21, 22, 23, 24, 25, 26, 27, 28, 29, 30) jeweils einen Polarisationsfilter (41, 42, 43, 44, 45, 46, 47, 48, 49, 50) aufweisen, wobei die Polarisationsebenen von mindestens zwei Polarisationsfiltern (41, 42, 43, 44, 45, 46, 47, 48, 49, 50) im Wesentlichen senkrecht zueinander angeordnet sind.

7. Vorrichtung nach Anspruch 5, wobei jeder der optischen Sensoren (21, 22, 23, 24, 25, 26, 27, 28, 29, 30) jeweils einen Polarisationsfilter (41, 42, 43, 44, 45, 46, 47, 48, 49, 50) aufweist, wobei die Polarisationsebenen von mindestens zwei Polarisationsfiltern (41, 42, 43, 44, 45, 46, 47, 48, 49, 50) im Wesentlichen senkrecht zueinander angeordnet sind.

8. Vorrichtung nach einem der vorhergehenden Ansprüche, wobei jeder der optischen Sensoren (21, 22, 23, 24, 25, 26, 27, 28, 29, 30) im Wesentlichen in Richtung eines gemeinsamen Detektionsbereiches (16) des Streulichtbereiches (15) ausgerichtet ist.

9. Vorrichtung nach einem der vorhergehenden Ansprüche, wobei einzelne oder alle optischen Sensoren (21, 22, 23, 24, 25, 26, 27, 28, 29, 30) als Fotodioden ausgebildet sind und/oder wobei die Lichtquelle (10) eine Leuchtdiode ist.

10. Vorrichtung nach einem der vorhergehenden Ansprüche, wobei die Vorrichtung einen optischen Sensor (21) in einem ersten Sensorwinkel (W1), einen optischen Sensor (30), in einem zweiten Sensorwinkel (W10) und einen optischen Sensor (24) in einem dritten Sensorwinkel (W4) aufweist, und wobei der erste Sensorwinkel (W1) ein spitzer Winkel ist und sich mit dem zweiten Sensorwinkel (W10) zu 360° ergänzt, und wobei der dritte Sensorwinkel (W4) ein stumpfer Winkel ist.

11. Vorrichtung nach Anspruch 10, wobei der erste Sensorwinkel (W1) etwa 45° und der zweite Sensorwinkel (W10) etwa 315° beträgt, und wobei der dritte Sensorwinkel (W4) etwa 112,5° beträgt.

12. Vorrichtung nach Anspruch 10 oder 11, wobei der Referenzsensor (23), der optische Sensor (21) im ersten Sensorwinkel (W1), der optische Sensor (30), im zweiten Sensorwinkel (W10) und der optische Sensor (24) im dritten Sensorwinkel (W4) jeweils einen Polarisationsfilter (43, 41, 50, 44) aufweist, und wobei die Polarisationsfilter (43, 41, 44) des Referenzsensors (23), des optischen Sensors (21) im ersten Sensorwinkel (W1) und des optischen Sensors (24) im dritten Sensorwinkel (W4) in einer ersten Polarisationsebene zueinander ausgerichtet sind, und wobei der Polarisationsfilter (50) des optischen Sensors (30) im zweiten Sensorwinkel (W10) in einer zweiten Polarisationsebene ausgerichtet ist, die senkrecht zur ersten Polarisationsebene ist.

13. Vorrichtung nach einem der vorhergehenden Ansprüche, wobei die Auswertungseinrichtung dazu ausgelegt ist, den Übereinstimmungsgrad durch Korrelation der Signalverläufe der Signale mit den Mustersignalverläufen zu bestimmen.

14. Vorrichtung nach einem der Ansprüche 1 bis 12, wobei die Auswertungseinrichtung dazu ausgelegt ist, den Übereinstimmungsgrad durch Distanzbestimmung der nach einer Hauptkomponenten-Analyse erhaltenen Verteilung der Signalverläufe der detektierten Signale zu Clustern (BUC, BAU, PUR, HEP, ABS, PAP, PAE, PVC, ZIG, ZRE, MEH, ZEM, TEP) der Mustersignalverläufe zu bestimmen.

15. Vorrichtung nach einem der Ansprüche 1-12, wobei die Auswertungseinrichtung dazu ausgelegt ist, den Übereinstimmungsgrad durch Auswertung der Signalverläufe der detektierten Signale und der Mustersignalverläufe in einem neuronalem Netz durchzuführen.

16. Vorrichtung nach einem der vorhergehenden Ansprüche, wobei die Mustersignalverläufe Partikelverteilungssignalverläufen von einem oder mehreren aus der Gruppe folgender Ereignisse entsprechen:
- Staubemission;
- Dampfemission;
- Tabakrauchemission;
- Papierschwelbrand;
- Pappschwelbrand;
- offener Papierbrand;
- offener Pappbrand;
- ABS-Brand;
- n-Heptanbrand;
- PVC-Brand;
- Baumwollbrand;
- Holzbrand;
- sonstige Partikelemissionen.

17. Vorrichtung nach einem der vorhergehenden Ansprüche, wobei die Vorrichtung in einem aspirativen Branddetektionssystem verwendet wird, wobei das aspirative Branddetektionssystem eine aktive Luftzufuhr zum Zuführen von zu klassifizierender Luft in den Streulichtbereichen (15) aufweist.

18. Vorrichtung nach einem der vorhergehenden Ansprüche, wobei ferner eine Einrichtung zum Detektieren eines Mindestpartikelpegels sowie einer Einrichtung zum wahlweisen Ermöglichen der Zufuhr von zu klassifizierender
Luft in den Streulichtbereich (15) vorgesehen sind, wobei die Zufuhr der zu klassifizierenden Luft dann ermöglicht wird, wenn ein Überschreiten des Mindestpartikelpegels detektiert ist.

19. Verfahren zum Detektieren von Streulichtsignalen, wobei das Verfahren die folgenden Verfahrenschritte aufweist:
- Zuführen von Licht in einen Streulichtbereich (15), wobei das einfallende Licht eine Einfallsachse (11) definiert; und
- Detektieren von Streulicht, welches an im Streulichtbereich (15) gegebenenfalls vorhandenen Partikeln reflektiert wird, mit einer Mehrzahl von optischen Sensoren (21, 22, 23, 24, 25, 26, 27, 28, 29, 30), mit einer Mehrzahl von Fotodioden, die jeweils bezogen auf die Einfallsachse (11) in einem Sensorwinkel (W1, W2, W3, W4, W5, W6, W7, W8, W9, W10) angeordnet sind
**gekennzeichnet durch folgende Verfahrensschritte:**
- Beziehen von Signalverläufen der optischen Sensoren (21, 22, 23, 24, 25, 26, 27, 28, 29, 30) auf einen Signalverlauf eines Referenzsensors zum Klassifizieren der Art der gegebenenfalls im Streulichtbereich (15) befindlichen Partikel.

20. Verfahren nach Anspruch 19, wobei das Verfahren weiterhin die folgenden Verfahrensschritte aufweist:
- Vergleichen von Signalverläufen der detektierten Signale mit Mustersignalverläufen unter Verwendung des Signalverlaufes des Referenzsensors; und
- bei einem hinreichend großen Übereinstimmungsgrad mit einem der Mustersignalverläufe: Ausgeben eines Kennzeichnungssignals an ein Inertisierungssystem zum wahlweise automatisch gesteuerten Reduzieren des Sauerstoffgehaltes in einem umschlossenen Raum, wobei das Kennzeichnungssignal den erkannten Mustersignalverlauf kennzeichnet.

21. Inertisierungssystem zum wahlweise automatisch gesteuerten Reduzieren des Sauerstoffgehaltes in einem umschlossenen Raum und zum Halten des reduzierten Sauerstoffgehaltes über einen festgelegten oder festlegbaren Zeitraum, wobei das Inertisierungssystem eine Vorrichtung zum Detektieren von Streulichtsignalen nach einem der Ansprüche 1 bis 18 aufweist, wobei das Inertisierungssystem dazu ausgelegt ist, den reduzierten Sauerstoffgehalt in Abhängigkeit eines Steuersignals einzustellen.

22. Inertisierungssystem nach Anspruch 21, wobei das Steuersignal das einen erkannten Mustersignalverlauf kennzeichnende Kennzeichnungssignal ist und das Inertisierungssystem dazu ausgelegt ist, den reduzierten Sauerstoffgehalt automatisch einzustellen und über den festgelegten oder festlegbaren Zeitraum zu halten.

## Claims

1. A device (100) for detecting scattered light signals, wherein the device comprises the following:
- a light source (10);
- a plurality of optical sensors (21, 22, 23, 24, 25, 26, 27, 28, 29, 30) for detecting scattered light; and
- an evaluation unit for evaluating the signals detected by the optical
sensors,
wherein the light source (10) emits light into a scattered light area (15), whereby the incident light defines an incident axis (11), wherein each of the optical sensors (21, 22, 23, 24, 25, 26, 27, 28, 29, 30) is arranged at a sensor angle (W1, W2, W3, W4, W5, W6, W7, W8, W9, W10) relative to the incident axis (11) so as to detect scattered light from the scattered light area (15),
**characterized in that**
one of the plurality of optical sensors (21, 22, 23, 24, 25, 26, 27, 28, 29, 30) is a reference sensor, wherein the evaluation unit is designed to relate the signal profiles of the other optical sensors (21, 22, 23, 24, 25, 26, 27, 28, 29, 30) to the signal profile of the reference sensor, wherein the signal profiles of the optical sensors (21, 22, 23, 24, 25, 26, 27, 28, 29, 30) serve to classify the type of particle which may be present in the scattered light area (15).

2. The device (100) according to claim 1,
wherein one optical sensor (23) of the plurality of optical sensors (21, 22, 23, 24, 25, 26, 27, 28, 29, 30) arranged at a substantially right sensor angle (W3) is the reference sensor.

3. The device according to claim 1 or 2, wherein the evaluation device is further designed so as to compare the signal profiles of detected signals from the plurality of optical sensors (21, 22, 23, 24, 25, 26, 27, 28, 29, 30) to pattern signal profiles and, upon a sufficiently high enough degree of correspondence to one of the pattern signal profiles, to emit an identification signal identifying the detected pattern signal profile.

4. The device according to any one of claims 1 to 3, wherein the light source (10) emits substantially monochromatic light in the wavelength range of approximately 560 to approximately 420 nm.

5. The device according to any one of the preceding claims, wherein at least one of the optical sensors (21, 22, 23, 24, 25, 26, 27, 28, 29, 30) comprises a polarizing filter (41, 42, 43, 44, 45, 46, 47, 48, 49, 50) for polarizing the scattered light to be detected.

6. The device according to claim 5, wherein a plurality of the optical sensors (21, 22, 23, 24, 25, 26, 27, 28, 29, 30) each comprises a polarizing filter (41, 42, 43, 44, 45, 46, 47, 48, 49, 50), wherein the polarization planes of at least two polarizing filters (41, 42, 43, 44, 45, 46, 47, 48, 49, 50) are arranged substantially perpendicular to each other.

7. The device according to claim 5, wherein each of the optical sensors (21, 22, 23, 24, 25, 26, 27, 28, 29, 30) comprises a respective polarizing filter (41, 42, 43, 44, 45, 46, 47, 48, 49, 50), wherein the polarization planes of at least two polarizing filters (41, 42, 43, 44, 45, 46, 47, 48, 49, 50) are arranged substantially perpendicular to each other.

8. The device according to any one of the preceding claims, wherein each of the optical sensors (21, 22, 23, 24, 25, 26, 27, 28, 29, 30) is substantially aligned in the direction of a common detecting region (16) of the scattered light area (15).

9. The device according to any one of the preceding claims, wherein individual or all of the optical sensors (21, 22, 23, 24, 25, 26, 27, 28, 29, 30) are designed as photodiodes and/or wherein the light source (10) is a light-emitting diode.

10. The device according to any one of the preceding claims, wherein the device comprises one optical sensor (21) at a first sensor angle (W1), one optical sensor (30) at a second sensor angle (W10), and one optical sensor (24) at a third sensor angle (W4), and wherein the first sensor angle (W1) is an acute angle and, together with the second sensor angle (W10), adds up to 360°, and wherein the third sensor angle (W4) is an obtuse angle.

11. The device according to claim 10, wherein the first sensor angle (W1) amounts to approximately 45° and the second sensor angle (W10) amounts to approximately 315°, and wherein the third sensor angle (W4) amounts to approximately 112.5°.

12. The device according to claim 10 or 11, wherein the reference sensor (23), the optical sensor (21) at the first sensor angle (W1), the optical sensor (30) at the second sensor angle (W10) and the optical sensor (24) at the third sensor angle (W4) each comprise a polarizing filter (43, 41, 50, 44), and wherein the polarizing filters (43, 41, 44) of the reference sensor (23), the optical sensor (21) at the first sensor angle (W1) and the optical sensor (24) at the third sensor angle (W4) are aligned with each another in a first polarization plane, and wherein the polarizing filter (50) of the optical sensor (30) at the second sensor angle (W10) is aligned in a second polarization plane perpendicular to the first polarization plane.

13. The device according to any one of the preceding claims, wherein the evaluation device is designed to determine the degree of correspondence by correlating the signal profiles of the signals to the pattern signal profiles.

14. The device according to any one of claims 1 to 12, wherein the evaluation device is designed to determine the degree of correspondence by determining the distribution of the signal profiles of the detected signals into clusters (BUC, BAU, PUR, HEP, ABS, PAP, PAE, PVC, ZIG, ZRE, MEH, ZEM, TEP) of the pattern signal profiles according to a principal component analysis.

15. The device according to any one of claims 1 to 12, wherein the evaluation device is designed to determine the degree of correspondence by evaluating the signal profiles of the detected signals and the pattern signal profiles in a neural network.

16. The device according to any one of the preceding claims, wherein the pattern signal profiles correspond to particle distribution signal profiles from one or more incidents of the following group:
- dust emission;
- vapor emission;
- tobacco smoke emission;
- smoldering paper fire;
- smoldering cardboard fire;
- open paper fire;
- open cardboard fire;
- ABS fire;
- n-Heptane fire;
- PVC fire;
- cotton fire;
- wood fire;
- other particle emissions.

17. The device according to any one of the preceding claims, wherein the device is used in an aspirative fire detection system, wherein the aspirative fire detection system comprises an active air supply for supplying air to be classified into the scattered light area (15).

18. The device according to any one of the preceding claims, wherein a mechanism for detecting a minimum particle level is further provided as well as a mechanism for selectively enabling the supplying of air to be classified into the scattered light area (15), wherein the supplying of the air to be classified is then enabled upon an exceeding of the minimum particle level being detected.

19. A method for detecting scattered light signals, wherein the method comprises the following method steps:
- supplying light into a scattered light area (15), wherein the incident light defines an incident axis (11); and
- detecting scattered light which reflects on any particles which may be present in the scattered light area (15) by means of a plurality of optical sensors (21, 22, 23, 24, 25, 26, 27, 28, 29, 30) having a plurality of photodiodes each arranged at a sensor angle (W1, W2, W3, W4, W5, W6, W7, W8, W9, W10) relative to the incident axis (11) **characterized by** the following method step:
- relating signal profiles of the optical sensors (21, 22, 23, 24, 25, 26, 27, 28, 29, 30) to a signal profile of a reference sensor for classifying the type of particle which may be present in the scattered light area (15).

20. The method according to claim 19, wherein the method further comprises the method steps:
- comparing the signal profiles of the detected signals to pattern signal profiles using the signal profile of the reference sensor; and
- upon a sufficiently high enough degree of correspondence to one of the pattern signal profiles: emitting an identification signal to an inertization system for the selectively automatic controlled reduction of the oxygen content in an enclosed room, wherein the identification signal identifies the pattern signal profile detected.

21. An inertization system for the selectively automatic controlled reduction of the oxygen content in an enclosed room and for maintaining the reduced oxygen content over a defined or definable period of time, wherein the inertization system comprises a device for detecting scattered light signals in accordance with any one of claims 1 to 18, wherein the inertization system is designed to set the reduced oxygen content as a function of a control signal.

22. The inertization system according to claim 21, wherein the control signal is the identification signal identifying a detected pattern signal profile and the inertization system is designed to automatically set the reduced oxygen content and maintain it over the defined or definable period of time.

## Revendications

1. Dispositif (100) pour détecter des signaux en lumière diffuse, le dispositif comprenant les éléments suivants :
- une source de lumière (10) ;
- une pluralité de capteurs optiques (21, 22, 23, 24, 25, 26, 27, 28, 29, 30) pour détecter de la lumière diffuse ; et
- un système d'évaluation pour évaluer les signaux détectés par les capteurs optiques,
dans lequel la source de lumière (10) émet une lumière dans une zone de lumière diffuse (15), la lumière incidente définissant un axe d'incidence (11), dans lequel chacun des capteurs optiques (21, 22, 23, 24, 25, 26, 27, 28, 29, 30) est agencé, par référence à l'axe d'incidence (11), dans un angle de capteur (W1, W2, W3, W4, W5, W6, W7, W8, W9, W10) afin de détecter la lumière diffuse provenant de la zone de lumière diffuse (15),
**caractérisé en ce que**
un des capteurs parmi la pluralité de capteurs optiques (21, 22, 23, 24, 25, 26, 27, 28, 29, 30) est un capteur de référence, et l'unité d'évaluation est conçue pour établir une référence des évolutions des signaux des autres capteurs optiques (21, 22, 23, 24, 25, 26, 27, 28, 29, 30) sur l'évolution des signaux du capteur de référence, et les évolutions des signaux des capteurs optiques (21, 22, 23, 24, 25, 26, 27, 28, 29, 30) servent à classifier le type des particules éventuellement présentes dans la zone de lumière diffuse (15).

2. Dispositif (100) selon la revendication 1,
dans lequel un capteur optique (23), agencé sensiblement dans un angle de capteurs droit (W3) parmi la pluralité de capteurs optiques (21, 22, 23, 24, 25, 26, 27, 28, 29, 30) est le capteur de référence.

3. Dispositif selon la revendication 1 ou 2, dans lequel l'unité d'évaluation est en outre conçue pour comparer les évolutions des signaux détectés de la pluralité de capteurs optiques (21, 22, 23, 24, 25, 26, 27, 28, 29, 30) avec des modèles d'évolution de signaux et, dans le cas d'un degré de coïncidence suffisamment élevé avec l'un des modèles d'évolution de signaux, pour délivrer un signal de caractérisation, qui caractérise le modèle d'évolution de signal reconnu.

4. Dispositif selon l'une des revendications 1 à 3, dans lequel la source de lumière (10) émet une lumière sensiblement monochromatique dans une gamme de longueurs d'onde d'environ 560 à environ 420 nm.

5. Dispositif selon l'une des revendications précédentes, dans lequel l'un au moins des capteurs optiques (21, 22, 23, 24, 25, 26, 27, 28, 29, 30) comprend un filtre de polarisation (41, 42, 43, 44, 45, 46, 47, 48, 49, 50) pour polariser la lumière diffuse à détecter.

6. Dispositif selon la revendication 5, dans lequel plusieurs des capteurs optiques (21, 22, 23, 24, 25, 26, 27, 28, 29, 30) comprennent chacun un filtre de polarisation (41, 42, 43, 44, 45, 46, 47, 48, 49, 50), tel que les plans de polarisation d'au moins deux filtres de polarisation (41, 42, 43, 44, 45, 46, 47, 48, 49, 50) sont agencés sensiblement perpendiculairement l'un à l'autre.

7. Dispositif selon la revendication 5, dans lequel chacun des capteurs optiques (21, 22, 23, 24, 25, 26, 27, 28, 29, 30) comprend respectivement un filtre de polarisation (41, 42, 43, 44, 45, 46, 47, 48, 49, 50), tels que les plans de polarisation d'au moins deux filtres de polarisation (41, 42, 43, 44, 45, 46, 47, 48, 49, 50) sont agencés sensiblement perpendiculairement l'un à l'autre.

8. Dispositif selon l'une des revendications précédentes, dans lequel chacun des capteurs optiques (21, 22, 23, 24, 25, 26, 27, 28, 29, 30) est orienté sensiblement en direction d'une zone de détection commune (16) de la zone de lumière diffuse (15).

9. Dispositif selon l'une des revendications précédentes, dans lequel des capteurs optiques individuels ou tous les capteurs optiques (21, 22, 23, 24, 25, 26, 27, 28, 29, 30) sont réalisés sous forme de photodiode et/ou dans lequel la source de lumière (10) est une diode électroluminescente.

10. Dispositif selon l'une des revendications précédentes, dans lequel le dispositif comprend un capteur optique (21) dans un premier angle de capteur (W1), un capteur optique (30) dans un second angle de capteur (W10) et un capteur optique (24) dans un troisième angle de capteur (W4), et dans lequel le premier angle de capteur (W1) est un angle aigu et est complété par le second angle de capteur (W10) à 360°, et dans lequel le troisième angle de capteur (W4) est un angle obtus.

11. Dispositif selon la revendication 10, dans lequel le premier angle de capteur (W1) s'élève à environ 45° et le second angle de capteur (W10) s'élève à environ 315°, et dans lequel le troisième angle de capteur (W4) s'élève à environ 112,5°.

12. Dispositif selon la revendication 10 ou 11, dans lequel le capteur de référence (23), le capteur optique (21) dans le premier angle de capteur (W1), le capteur optique (30) dans le second angle de capteur (W10) et le capteur optique (24) dans le troisième angle de capteur (W4) comprennent chacun un filtre de polarisation (43, 41, 50, 44), et dans lequel les filtres de polarisation (43, 41, 44) du capteur de référence (23), du capteur optique (21) dans le premier angle de capteur (W1) et du capteur optique (24) dans le troisième angle de capteur (W4) sont orientés les uns vers les autres dans un premier plan de polarisation, et dans lequel le filtre de polarisation (50) du capteur optique (30) dans le second angle de capteur (W10) est orienté dans un second plan de polarisation qui est perpendiculaire au premier plan de polarisation.

13. Dispositif selon l'une des revendications précédentes, dans lequel l'unité d'évaluation est conçue pour déterminer le degré de coïncidence par corrélation des évolutions des signaux avec les modèles d'évolution de signaux.

14. Dispositif selon l'une des revendications 1 à 12, dans lequel l'unité d'évaluation est conçue pour déterminer le degré de coïncidence par détermination de distance de la répartition des évolutions des signaux détectés, obtenues selon une analyse des composants principaux vis-à-vis de grappes (BUC, BAU, PUR, HEP, ABS, PAP, PAE, PVC, ZIG, ZRE, MEH, ZEM, TEP) des modèles d'évolution de signaux.

15. Dispositif selon l'une des revendications 1 à 12, dans lequel l'unité d'évaluation est conçue pour déterminer le degré de coïncidence par évaluation des évolutions des signaux détectés et des modèles d'évolution de signaux dans un réseau neuronal.

16. Dispositif selon l'une des revendications précédentes, dans lequel les modèles d'évolution de signaux correspondent à des évolutions de signaux de répartition de particules d'un ou plusieurs événements parmi les groupes d'événements suivants :
- émission de poussières ;
- émission de vapeur ;
- émission de fumée de tabac ;
- feu couvant de papier ;
- feu couvant de carton ;
- feu de papier ouvert ;
- feu de carton ouvert ;
- feu de ABS ;
- feu de n-heptane ;
- feu de PVC ;
- feu de coton ;
- feu de bois ;
- autres émissions de particules.

17. Dispositif selon l'une des revendications précédentes, dans lequel le dispositif est utilisé dans un système de détection d'incendie par aspiration, dans lequel le système de détection d'incendie par aspiration comprend une admission d'air active pour admettre de l'air à classifier dans les zones de lumière diffuse (15).

18. Dispositif selon l'une des revendications précédentes, dans lequel il est en outre prévu un moyen pour détecter un niveau minimum de particules ainsi qu'un moyen pour permettre sélectivement l'admission d'air à classifier dans la zone de lumière diffuse (15), et l'admission d'air à classifier et rendue possible si un dépassement du niveau minimum de particules est détecté.

19. Procédé pour détecter des signaux en lumière diffuse, dans lequel le procédé comprend les étapes de procédé suivantes :
- admission de lumière dans une zone à lumière diffuse (15), la lumière incidente définissant un axe d'incidence (11) ; et
- détection de lumière diffuse, qui est réfléchie sur des particules éventuellement présentes dans la zone à lumière diffuse (15), avec une pluralité de capteurs optiques (21, 22, 23, 24, 25, 26, 27, 28, 29, 30), avec une pluralité de photodiodes qui sont agencées chacune, par référence à l'axe d'incidence (11), dans un angle de capteur (W1, W2, W3, W4, W5, W6, W7, W8, W9, W10),
**caractérisé par** les étapes de procédé suivantes :
- établissement d'une référence des évolutions des signaux des capteurs optiques (21, 22, 23, 24, 25, 26, 27, 28, 29, 30) sur une évolution des signaux d'un capteur de référence pour classifier le type des particules qui se trouvent le cas échéant dans la zone de lumière diffuse (15).

20. Procédé selon la revendication 19, dans lequel le procédé comprend en outre les étapes de procédé suivantes :
- comparaison des évolutions de signaux détectées avec des modèles d'évolution de signaux en utilisant l'évolution des signaux du capteur de référence ; et
- dans le cas d'un degré de coïncidence suffisamment élevé avec l'un des modèles d'évolution de signaux : fourniture d'un signal de caractérisation à un système d'inertisation pour la réduction sélective à commande automatique de la teneur en oxygène dans un local fermé, tel que le signal de caractérisation caractérise le modèle d'évolution des signaux.

21. Système d'inertisation pour la réduction sélective à commande automatique de la teneur en oxygène dans un local fermé et pour maintenir la teneur réduite en oxygène sur une durée déterminée ou déterminable, dans lequel le système d'inertisation comprend un dispositif pour détecter des signaux en lumière diffuse selon l'une des revendications 1 à 18, et le système d'inertisation est conçu pour régler la teneur réduite en oxygène en fonction d'un signal de commande.

22. Système d'inertisation selon la revendication 21, dans lequel le signal de commande est le signal de caractérisation qui caractérise un modèle d'évolution de signaux reconnu et le système d'inertisation est conçu pour régler automatiquement la teneur réduite en oxygène et la maintenir sur la durée déterminée ou déterminable.
